# EUROPEAN PATENT SPECIFICATION

(11) **EP 0 480 622 B1**
(45) Date of publication and mention of the grant of the patent: **22.04.1998**
(21) Application number: 91309024.7
(22) Date of filing: 02.10.1991
(51) Int. Cl.: H04M 3/50, H04M 3/44, H04M 3/42, H04Q 11/04

(54) **Automation of telephone operator assistance calls**
Automatisierung von Fernmeldeanrufen mit Vermittlungshilfsplätzen
Automatisation d'appels téléphoniques à assistance d'opératrice

(30) Priority: 12.10.1990 US 596809; 27.03.1991 US 675783; 27.03.1991 US 675779
(43) Date of publication of application: 15.04.1992
(73) Proprietor: AT&T Corp., New York, NY 10013-2412 (US)
(72) Inventor: Dowden, Douglas Calhoun, Naperville, Illinois 60540 (US); Hemmeter, Richard Warren, Naperville, Illinois 60563 (US); Herr, Diane Elaine, Warrenville, Illinois 60555 (US); McCormick, William Keating, Chester, New Jersey 07930 (US); Petrelli, Robert, East Brunswick, New Jersey 08816 (US); Piereth, Richard Joseph, Naperville, Illinois 60540 (US); Salchenberger, Samuel Martin, Elmhurst, Illinois 60126 (US); Sehgal, Chander Sekhar, Naperville, Illinois 60540 (US); Verma, Mahendra Kumar, Marlboro, New Jersey 07746 (US)
(74) Representative: Buckley, Christopher Simon Thirsk

(56) References cited:
- EP-A- 0 245 028
- US-A- 4 893 328
- US-A- 4 932 042
- AT & T TECHNICAL JOURNAL vol. 69, no. 5, September 1990, NEW YORK US pages 77 - 86 M.K.VERMA ET AL 'NOVEL APPLICATIONS OF SPEECH PROCESSING IN AT &T NETWORK SYSTEMS PRODUCTS'
- EUROPEAN CONFERENCE ON SPEECH COMMUNICATION AND TECHNOLOGY vol. 1, September 1989, PARIS (FR) pages 441 - 444 DR.THOMAS B. SCHALK 'AUTOMATING OPERATOR- ASSISTED CALLS USING SPEECH RECOGNITION'
- SPEECH TECHNOLOGY, MAN-MACHINE VOICE COMMUNICATIONS vol. 4, no. 2, March 1988, NEW YORK US pages 22 - 25 ED TAGG 'AUTOMATING OPERATOR-ASSISTED CALLS USING VOICE RECOGNITION'

## Description

This invention relates to methods and circuit means for use in switching systems.

Over the past several decades, a great deal of toll telephone traffic which used to be handled by operators has been automated. The initial step of automating what was originally operator assistance traffic was to offer customer-dialed long distance call service. Then, customer-dialed operator assistance calls were introduced to permit operators to process calls for which the number had already been dialed. Automatic recording of telephone charges was introduced also at that time. Today, the category of fully or partially automated operator assistance telephone traffic includes coin calls, calling card calls, automatic quotation of charges for hotel guest originated calls, and partial automation of collect and person calls. In spite of the intensive effort to automate operator assistance calls, telephone companies annually spent over a billion dollars for operator wages and accompanying overhead costs.

Operator assisted calls are processed from attended operator positions attached to operator assistance switching systems or switches. These switches are operated under the control of a complex program, generally referred to as a generic program, which must be tested very carefully to ensure that no program flaws remain that could cause a system to "crash" or become non-functional. The switch communicates with operator positions by data messages used to operate displays at the operator position, and to transmit information keyed by the operator, in response to instructions from the caller, to the switch. The generic program is designed carefully to ensure that poor data received from an operator switch does not affect more than one call. A problem in such switches is that it is difficult to introduce new services and to automate operator functions because of the difficulty of changing the generic program. The largest component of operator assistance calls which have not been fully automated are collect calls and third number calls. Even these are being partially automated through the use of an arrangement known as "More Efficient Call Handling For Operator Assistance Calls" (MECH) described in T. M. Bauer et al., U.S. patent 4,899,375, which discloses an arrangement wherein an initial operator determines the type of call and then is disconnected while the call is being set up and the called customer is being alerted; subsequently, a second operator is attached to the call only if necessary, for example, after an answer for collect calls.

In A.N. Daudelin, U.S. patent 4,486,833, a speech recognition unit that is a part of an operator assistance switch is used to determine a call type, and cooperate in the automatic establishment of the call. When the called party answers on a collect call, the speech recognition unit determines whether the called customer accepts the call.

Another arrangement is described in Comella et al: U.S. patent 4,054,756, wherein customers with dual tone multifrequency (DTMF) stations key initial digits indicating the type of call, then key all necessary numerical information (including, for example, the identification of the third number). For collect or third number calls, the calling customer records his or her name for identification purposes to the collector third number party; the latter then keys an acceptance signal if the call can be allowed to proceed.

In another arrangement recently announced by Northern Telecommunications, Inc., a caller dials a number including an indication of a call type, and on a collect call, when prompted to do so, speaks his or her name. After the call has been established to the called customer for a collect call or to the third party for a third number call, a speech recognition unit is used to detect whether the called customer accepts the call by speaking a "yes" or a "no". A speech processing unit is connected via a segragated transmission facility for handling these calls. If the called customer has a DTMF station, the called customer or the third party can key an acceptance instead of speaking such an acceptance.

In view of the foregoing, a need exists in the art for an arrangement that facilely automates many of the remaining operator assistance calls, such as collect calls and third number calls, which still require the assistance of an operator. The need is particularly acute for a system which can perform such automation without requiring massive changes in the complex software of the controller of the operator assistance system.

A further need exists with respect to the processing of spontaneous voice messaging calls. An arrangement for handling such calls is described in U.S. Patent 4,932,042 which discloses arrangements for converting a call to busy or to a customer who does not answer to a voice message call without requiring the caller to reoriginate the call and preserving the caller's number as previously identified and the caller's and called numbers as previously identified for the voice message call. The arrangement requires that the caller have a dual tone multifrequency (DTMF) telephone in order to take advantage of the service and requires connection of an announcement and a DTMF receiver to the call.

Another problem of the prior art relates to automatic dialing of frequently dialed telephone numbers. This need is served by customer station equipment in which these frequently dialed numbers can be preset or in telephone central office arrangements which, in response to an abbreviated identification, establish a call to a prespecified destination. In both cases, the arrangements are operative only when the customer dials from his or her home or office telephone or from a mobile phone which has been preprogrammed with the desired telephone numbers.

EUROPEAN CONFERENCE ON SPEECH COMMUNICATION AND TECHNOLOGY vol. 1, September 1989, PARIS (FR) pages 441-444 DR. THOMAS B. SCHALK 'AUTOMATING OPERATOR-ASSISTED CALLS USING SPEECH RECOGNITION' describes an arrangement wherein certain types of operator assistance calls are processed by speech recognition and announcement systems attempting to emulate the functions of an operator and the functions of the control of the switching system. In order to implement the system a controller arrangement must be designed which carries out essentially all the functions of an operator assistance system controller. For example, the system described, when processing calling card calls, directly checks the calling card data base to verify the authorization status of that calling card.

According to one aspect of this invention there is provided a method as claimed in claim 1.

According to another aspect of this invention there is provided circuit means as claimed in claim 11.

An advance is made over the prior art wherein an unattended automated position is substituted for some of the operator positions attached to an operator assistance switch; such an automated position includes means for recognizing commands such as speech commands, for making announcements to a connected telephone customer, and optionally, for detecting DTMF digits, for recording speech, and for detecting a switch-hook "flash" (i.e., a brief depression of the switch-hook). In one preferred embodiment, the interface between the operator position and the operator assistance switching system is maintained for the automated position so that the existing data communications in both directions are the same. The assistance switching system communicates with the positions using the same messages for generating displays at the operator position and the automated position. Similarly, the automated position communicates with the switching system using the same messages used by the operator position for controlling switching system operations. If an automated position cannot process a particular call, either because the call type is not anticipated in the program controlling the automated position, or because the automated position cannot recognize the caller's speech, the automated position sends a data message to the switch asking that the call be switched to an attended operator position. Advantageously, the switching system has already been designed to react in a safe manner to any combination of control signals from the operator position so that the amount of damage inflicted on other calls as a result of improper performance by an automated position is highly restricted.

For processing a collect call, the automated position first announces to the customer a request for selection of a call type and recognizes the requested command issued by the customer as a spoken "collect" or its DTMF equivalent. This data is reported to the switch which makes a database check to ensure that the called customer is of a type that may accept collect calls. For example, pay phones and phones located in prisons typically are not allowed to accept collect calls. Certain countries will not accept collect calls. If the database check indicates that a collect call can be accepted, the automated position announces a request that the customer speak his or her name and records the response. The call is then set up to the called customer. When the called customer responds to an alerting (e.g., ringing) signal by going offhook, an announcement is transmitted from the automated position to the called customer saying: "You have a collect call from" followed by the recorded name. The announcement continues: "If you wish to accept the charges, please say yes". If the called customer says "yes" and this speech signal is recognized by the speech recognition unit, then a confirmation announcement is given, the call is completed as a collect call, and the switching system is notified by the automated position that the billing is to be arranged as collect call billing. The called party is also offered the opportunity to say "no" or to go onhook if the charges are not accepted.

For a third number call, the automated position first requests the type of call. Upon detecting the words "third number" or their DTMF equivalent, the automated position requests the customer to supply the third number either by keying the number on a DTMF station or by speaking the number. The automated position also requests that the caller speak his or her name, and records the response. The automated position then reports the billing number and the call type to the switching system. The switching system checks databases to determine what type of verification is required before the call can be completed. Assume that the switching system determines that it is necessary to consult the third party to verify that the third party is willing to pay. The switching system then sets up a connection to the customer station of the third number. After that customer station answers, the automated position announces to that station the identification of the call as a request that the third number pay for a call, followed by the recorded name of the caller, followed by a request: "Will you accept charges for this call? If so, say yes". The response is then detected by the automated position which, if it detects a positive response, will signal to the switching system to set up the call. The third party is also offered the opportunity to say "no" or to go onhook if the charges are not accepted.

The automated position can access a remote database in essentially the same way that an operator position does. The automated position sends the same kinds of messages and performs the same kind of data interpretation of the return message as is performed by an operator at a conventional operator position.

If a customer feels the necessity of invoking the services of a live operator, the automated position is capable of detecting the word "operator" or DTMF 0 and responding to the detection of that input by signaling the operator assistance switching system to connect the call to an operator position staffed by a live operator. This reconnection feature uses a feature that exists in AT&T's Operator Services Position System (OSPS) for transferring a call from one operator position to another for invoking the services of an operator supervisor.

In accordance with one specific embodiment of the invention, the operator assistance switch is a switch arranged to interface with integrated services digital network (ISDN) terminals. The automated position interfaces with the two B-channels and one D-channel of a basic rate interface of ISDN using one 64 kilobit B channel for voice signals and using the 16 kilobit D channel for control and signaling signals and for database access.

Once the automated position has been installed, it is a relatively straightforward matter to increase the number and complexity of the scripts to be followed by such automated position groups because the protection in the switching system against adverse results from receiving improper control signals from the operator position is already a basic part of the operator assistance switch. It is not necessary to modify the generic program of such a switch for accepting such additional scripts; the modification of the generic program requires great care in its introduction because a software error can cause the switch to fail.

Monitoring of the performance of an automated assistance position is straightforward. Monitoring an operator in a system such as the Operator Service Position System (OSPS) which is a feature of AT&T's 5ESS® switch and is described, for example, in Document AT&T 5D5-520-105, Operator Services Position System, Toll and Assistance Video Display Terminal Description and Operation. This system has been arranged to allow any operator position to monitor any other operator position. Monitoring of an automated position from a monitoring operator position is performed in the same way. While monitoring, the monitoring position receives all messages destined for the monitored position and receives all messages generated by the monitored position. As a result, the introduction of a new service can be tried on one automated position and the performance of that automated position can be monitored by a live operator sitting at a monitoring position. Alternatively, the automated position can be monitored by allowing an operator to bridge a headset across the voice signal path and to observe visual displays displayed on a screen of the automated position. Advantageously, this arrangement allows for a straightforward and safe check of a new service feature.

In accordance with another feature of the OSPS, operator positions may be divided into teams and a flexible arrangement created for flowing traffic between these teams. This feature is known as intraflow and is described, for example, in AT&T SESS Switch Feature Handbook. When introducing a new feature, the new feature is first introduced into a small number of automated positions which form a separate team and the performance of this separate team is carefully monitored. Any excess traffic is handled by operator positions using the intraflow feature. After satisfactory performance has been established, the software for the new feature can be loaded into other automated positions which can then be added to the original team on which the feature was tested.

In one embodiment of the invention, a voice processing unit and data processor serves four ports on the operator assistance switch, thus effectively sharing the unit over four automated positions. The number of ports served by a voice processing unit is a traffic engineering decision based on unit capacity and reliability requirements. This arrangement allows the voice processing unit and data processor to be shared, thus lowering per port cost of automated positions.

The spontaneous voice messaging problem is solved by connecting the caller to an automated position and using that automated position to detect called number busy and called number don't answer, and to make announcements to the caller, if necessary, for stimulating a spontaneous voice message request, and to detect speech commands requesting spontaneous voice message service. Advantageously, such an arrangement allows spontaneous voice message service to be offered to customers who are calling from rotary dial telephone stations or push button dial pulse telephone stations.

The problem of providing a simplified arrangement for dialing frequently called numbers, when the caller is away from his home or office or is using a mobile phone that has not been programmed with the appropriate numbers, is solved by connecting the caller to automated position means for recognizing a spoken command from the caller. These spoken commands are individually recorded for each caller and the commands are compared only with the command previously recorded for that caller. Advantageously, a connection is set up to a prespecified number in response to a spoken command from the caller. The number which is used for accessing the caller's repertory of spoken commands may be preprogrammed into a mobile telephone unit so that commands which are recorded from the customer so that access to the appropriate voice recognition system is simplified. Advantageously, such an arrangement allows a caller, such as a busy attorney with frequent changes of clients, to record the telephone numbers of his or her current clients and to access these clients while away from home without having to remember their telephone numbers.

### Brief Description of the Drawing

FIG. 1 is an overall block diagram of an operator assistance switch and a connected operator position and automated position group;
FIGS. 2-13 are flow diagrams of methods of processing operator assistance calls ;
FIG. 14 is a block diagram of an automated position group; and
FIGS. 15-18 are flow diagrams of a method for offering spontaneous voice messaging service and a simplified arrangement for dialing frequently called numbers .

### Detailed Description

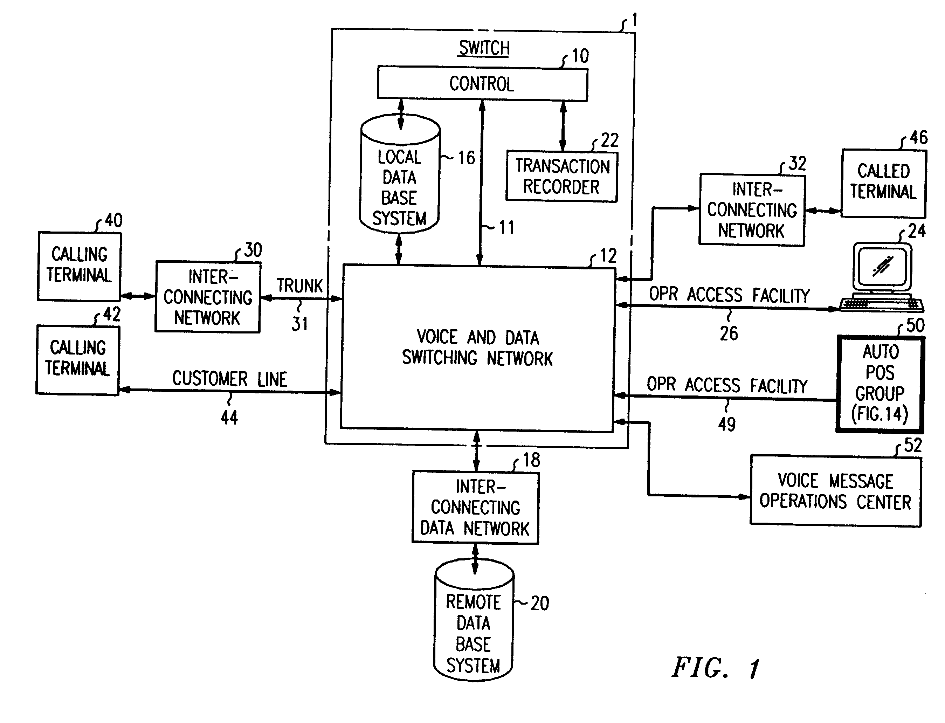

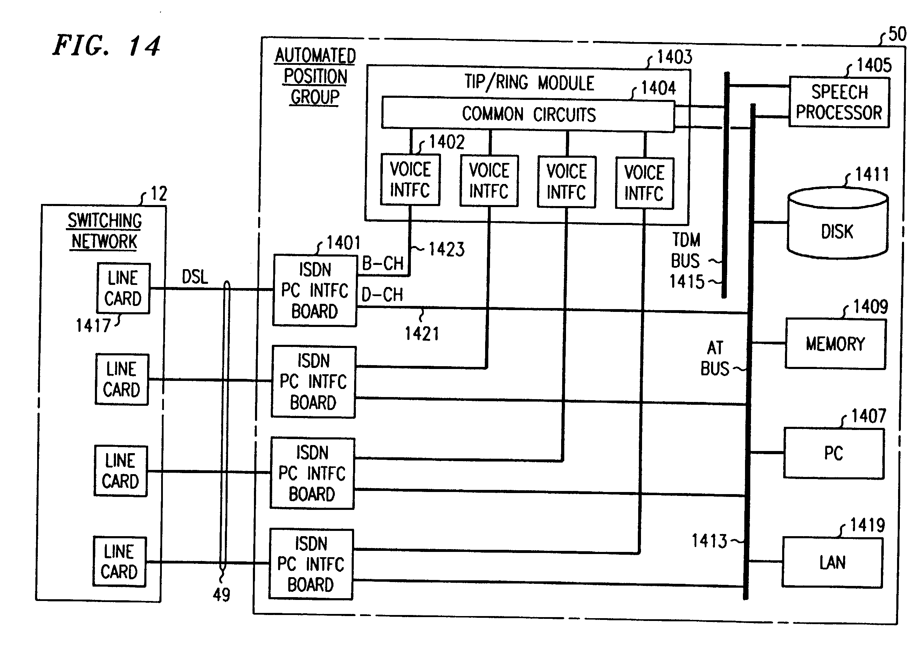

The principles of the present invention may be understood by examining an exemplary embodiment. FIG. 1 is a block diagram of a system arranged to embody the present invention. The novel portion of FIG. 1 is an automated position group, block 50, shown in heavy outline and expanded in FIG. 14. Block 1 represents a telecommunications switch operating under stored program control and having within it the elements necessary for practicing the invention. Switch 1 is a switch such as the SESS switch manufactured by AT&T Technologies, Inc., arranged to offer the Operator Services Position System (OSPS) features. The SESS switch is described, for example, in AT&T Technical Journal, v. 64, no. 6, part 2, pp. 1305-1564, and the OSPS feature is described, for example, in Paper 3, Session 22C presented at the International Switching Symposium in May, 1984.

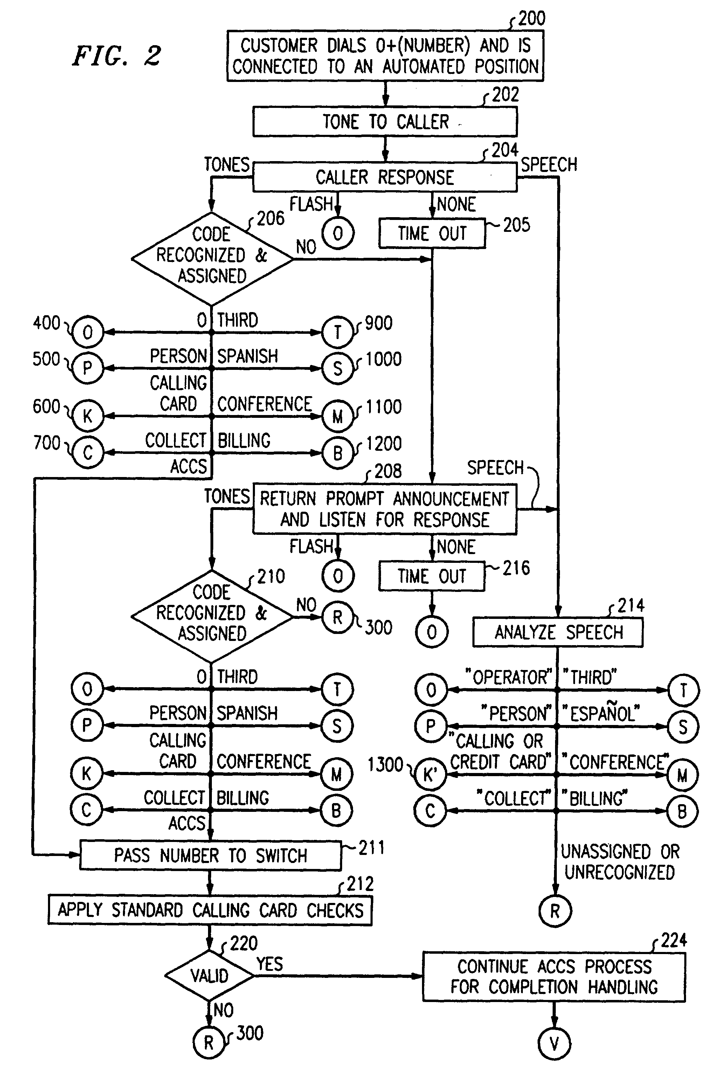

Within switch 1 are various blocks for carrying out the functions of a telecommunications switch. Control 10 is a distributed control system operating under the control of a group of data and call processing programs to control various blocks of the switch. In order to practice the present invention, the operator services control programs must be augmented by programs described in the flow charts of FIGS. 2-13. Control 10 is used to control operations of switch 1. Block 12 is a voice and data switching network capable of switching voice and/or data between inputs connected to the switching network.

In this embodiment, network 12 has integrated voice/data outputs in the Integrated Services Digital Network (ISDN) format. The switch communicates with operator positions over an ISDN connection with a Basic Rate Interface (BRI) for communicating two B-channels (64 kbit/second (kb/s)) and one D-channel (16 kb/s). The B-Channels are used for voice signals in this embodiment. Connected to the switch are a conventional operator position 24, attended by a human operator, and automated position group 50, shown in detail in FIG. 14. The automated position group 50 serves four simultaneous calls and includes facilities for performing voice processing. The voice processing arrangement receives an input signal which may be either voice or a dual tone multifrequency (DTMF) signal and has the capability for analyzing that signal to distinguish among the various allowable DTMF signals and among the individual elements of a predetermined list of spoken responses. The voice processing arrangement also generates tones and voice messages to prompt a customer to speak or key information into the system for subsequent recognition by the voice processing unit. In addition, the voice processing unit has the capability for recording a short customer response, typically, a name, for subsequent playback to a called terminal. These recordings may also be saved for subsequent use in fraud detection. For example, evidence can be accumulated for stations with a high propensity for fraud. Within the automated position group, the voice processing arrangement generates an output data message, representing the result of the voice processing; this output message is used as an input to a program in the automated position group for controlling the generation of position messages to the switch 10. In response, the switch controls the establishment of connections in switching network 12 and generates display data for the automated position 50. The Conversant® Voice Information System, manufactured by AT&T Technologies, Inc., is one unit which can be used to carry out the functions of the voice processing arrangement.

Two types of data base systems are used by switch 1 in order to set up operator assistance calls . Local data base system 16 is directly accessible by control 10 of switch 1 via switching network 12. Remote data base system 20 is accessible to control 10 of switch 1 via switching network 12 and an interconnecting data network 18. A remote data base system is typically used for storing data that is shared by many switches. For example, a remote data base system might store data pertaining to customers for a region; the particular remote data base system that is accessed via data network 18 would be selected to be the remote data base system associated with the region of the called terminal. Interconnecting data network 18 can be any well known data network and specifically could be a common channel signaling system such as the the international standard telecommunications signaling system CCS 7.

Transaction recorder 22 is used for recording data about calls for subsequent processing. This data typically is billing data which is subsequently sent over a data link to be processed by a billing processor in order to prepare customer bills. The transaction recorder is also used for recording traffic data in order to engineer additions properly and in order to control traffic dynamically.

Operator position 24 connected to switch 1 comprises a terminal for use by an operator in order to control operator assistance calls. Data displays for the terminal of operator position 24 are generated by control 10. Operator position 24 is connected to the voice and data switching network 12 by operator access facility 26 which may include carrier facilities in order to allow the operator position to be located remotely from switching network 12. Alternatively, operator access facility 26 may be a simple voice and data access facility if the operator positions are located in close physical proximity to the switching network. Only one operator position is shown in FIG. 1 but it is understood that a typical switch, arranged to offer operator assistance services, has access to a large number of such operator positions.

It is often desirable that certain kinds of operator functions be assigned to specialized teams. One example is Spanish-speaking operators who could be accessed by customers with English language difficulties whose native language is Spanish. Another example is operators who have access to the special facilities required for setting up conference calls. Still another example is operators from a customer credit and service bureau who have access to customer billing records who can handle customer requests for billing information and for credit in case a customer reached a wrong number. In order to access the proper one of these operator teams, a customer's spoken command, or, in the case of a customer with a DTMF terminal, a keyed command code is used. In some cases (not shown in FIG. 1) specialized teams may be attached to a different switch in which case an interconnecting network is used to connect the originating customer to that switch for connection to an operator from an appropriate operator team.

Connected to switch 1 are interconnecting networks 30 and 32. These are networks which may include one or more switches and which are used for interconnecting voice and data signals between customer terminals and switch 1. Also connected to switch 1 are customer lines, including customer line 44, for connecting a calling terminal 42 to switch 1. The word "terminal" as used herein includes a simple customer telephone station, a customer station with more elaborate features such as magnetic stripe card readers, or a customer voice/data terminal. Calling terminal 40 is connected through interconnecting network 30 to switch 1. In this specific example, calling terminal 40 is connected by a customer line to a 1AESS switch and that switch is connected to trunk 31 which is connected to switch 1. For the sake of clarity, a separate interconnecting network 32 is shown as being interposed between switch 1 and called terminal 46. In practice, interconnecting networks 30 and 32 are parts of a much larger common carrier network. In the example call described below, interconnecting network 32 contains different switches from interconnecting network 30. Called terminal 46 is connected to interconnecting network 32 and via that network can be accessed by switch 1. If the calling terminal is not directly connected to switch 1, the directory number of the calling terminal, identified, for example, by automatic number identification, is transmitted from the switch connected to the calling terminal to switch 1.

The term "operator assistance call" as used herein also refers to calls some of which are already automated. For example, Automated Calling Card Service (ACCS) has made it possible for customers having a DTMF terminal to place a calling card call without requiring the services of an operator. As discussed hereinafter, other classes of operator assistance calls may also no longer require the service of an operator. Thus, the term "operator assistance call" refers to those classes of calls which have in the past usually required the service of an operator, such as those which are dialed with an initial digit 0.

In order to illustrate the basic principles of the invention, a simple collect call from calling terminal 42 to called terminal 46 will be described. The customer at a calling terminal is referred to as a calling customer or caller. In this example, the called customer at terminal 46 has agreed ahead of time to accept collect calls but wishes to be informed when an incoming call is a collect call. The caller at terminal 42 dials or keys 0, followed by the directory number of called terminal 46. This number which is dialed over customer line 44 is received in voice and data switching network 12 and passed to control 10 via control access 11. Control 10 analyzes this dialed (using a dial terminal) or keyed (using a DTMF terminal) number and recognizes that calling terminal 42 has placed some kind of operator assistance call. In order to determine whether this is a calling card, third number (third), person-to-person (person), collect, Spanish-speaking (Spanish), conference, billing or other operator assistance call, it is necessary to connect the calling customer at terminal 42 to a port of automated position group 50. After this connection has been established, automated position group 50 returns a (prompting) tone to calling terminal 42. In response to this tone, if the calling customer at terminal 42 has a DTMF telecommunications terminal, the customer will dial a two-digit command code identifying the class of the call to be placed as a collect call. If the calling customer does not have a DTMF terminal or chooses to speak, then the customer can speak one of the allowed call type phrases such as: collect, calling card, person, third number, operator, español (to request a Spanish-speaking operator), conference, or billing, and, in this case, will say "Collect". If the calling customer fails to key in the command code or to speak the command, he or she will be prompted by an announcement which says: "Please say collect, calling card, person, third number, español, conference, billing, or operator now." The keyed command code, or the spoken command is analyzed by automated position group 50 which determines that a collect call is to be set up. The tone or announcement is used to prompt the calling customer to give the requested response. After a time, only the tone may be required since customers will learn to interpret the tone as a prompting signal. To reassure the calling customer, that customer receives an announcement from voice processing unit 1405 (FIG. 14) of automated position group 50, while the call is being set up, to indicate that a collect call is being set up from his terminal to the called customer.

A connection is then set up through interconnecting network 32 to called terminal 46. The characteristics of called customers, with respect to what kinds of collect calls they will accept, are stored in regional data base systems such as remote data base system 20 which contains data for called terminal 46. Other kinds of originating and terminating customer data are stored in local or remote data base systems as convenient. System 20 is queried before the connection to the called customer is being established. For this example call, the query indicates that the called customer will accept all collect calls but wishes to be informed that an incoming call is collect.

When called terminal 46 answers, the answer signal is transmitted back to switching network 12 and is passed to control 10 via control access 11. When control 10 receives this answer signal, control 10 sets up a connection in switching network 12 from automated position group 50 through interconnecting network 32 to called terminal 46 to announce to the called customer that this is a collect call. Since called customer 46 has agreed in advance to accept all collect calls, the call between calling terminal 42 and called terminal 46 may be set up through switching network 12 after this announcement has been received by the called customer. Note that this exemplary call has been established without requiring the services of an operator.

Customers may specify that they will accept all collect calls, that they wish to decide without further data whether or not to accept each collect call, that they want to know the name of the calling party and wish to decide for each call, or that they will accept no collect calls. Alternatively, an announcement to the called customer announcing a collect call could include the area code, the geographic locality, or the full directory number of the calling customer in order to supply the called customer with further call data that he can use in order to decide whether to accept the call, or could include a recording, made in the automated position group by the caller, of the caller's name.

In this specific embodiment, automated credit card calls are detected in parallel with other types of automated operator calls. This is in contrast with the present arrangements wherein card calls are detected first when a customer keys a calling card number in response to an initial "bong" tone. A disadvantage of this arrangement is that ACCS calls must be routed to an automated position thus utilizing the more expensive resources of an automated position instead of being connected to a DTMF detector. The advantage of the operation disclosed herein is that there is no need to wait for a timeout following the ACCS tone before attaching the automated position thereby providing faster service to customers for calls other than ACCS. An additional advantage is that the switch owner can modify the treatment of ACCS calls within the automated position without changing the control program of the switch.

FIGS. 2-13 are flow diagrams of the process of handling operator assistance calls under the control of the automated position group 50 and the control 12 of the switch. The process begins when a customer dials 0 plus a directory number. (Calls to 0 with no further numbers are routed to operator positions since they may be emergency calls.) The customer is then connected under the control of 12 to an automated position (action box 200, FIG. 2). The automated position returns a tone to the caller (action box 202). The next action of the automated position depends on the input from the calling customer (decision box 204). If the calling customer speaks, the program executes a transfer to box 214, discussed further below. If the calling customer keys DTMF signals into the system, test 206 is performed. Test 206 determines whether the numbers represented by the customer's keyed tones correspond to one of the codes used for identifying the class of an operator assistance call, a telephone number, or the format of a calling card number, or none of these. If the tones correspond to the format of a calling card number, the number is passed to the switch (action box 211) and standard ACCS treatment of the call is invoked (action box 212). With this standard treatment, the calling customer's calling card number is checked for validity, and, if the calling card number is valid, the call is completed. Command codes are assigned to identify classes of operator assistance calls; the example classes are operator (O), collect (C), calling card (K), person-to-person (P), third number billing (T), Spanish (S), multi-party conference (M), and billing credit (B). The codes for these classes of calls might, for example, be the digits 11-18, the digits 19 being reserved for 10 additional services, identified by 19X. I is a preferred initial number for these codes since this number can never be the initial number of a calling card or telephone number. By using 1 as the initial digit, it is not necessary to time for possible additional digits after a two-digit command code has been keyed. The present embodiment of the invention can therefore be used without interfering with ACCS treatment of credit card calls. In terms of the flow chart, once one of these codes is recognized, the appropriate subroutine for handling this type of call is entered. These subroutines have been called O for operator (subroutine 400), C for collect calls (subroutine 700), K for calling card calls (subroutine 600), P for person-to-person calls (subroutine 500), T for third party billing calls (subroutine 900), S for Spanish-speaking operator (subroutine 1000), M for multi-party conference operator (subroutine 1100), and B for (billing) customer credit and service bureau operators (subroutine 1200).

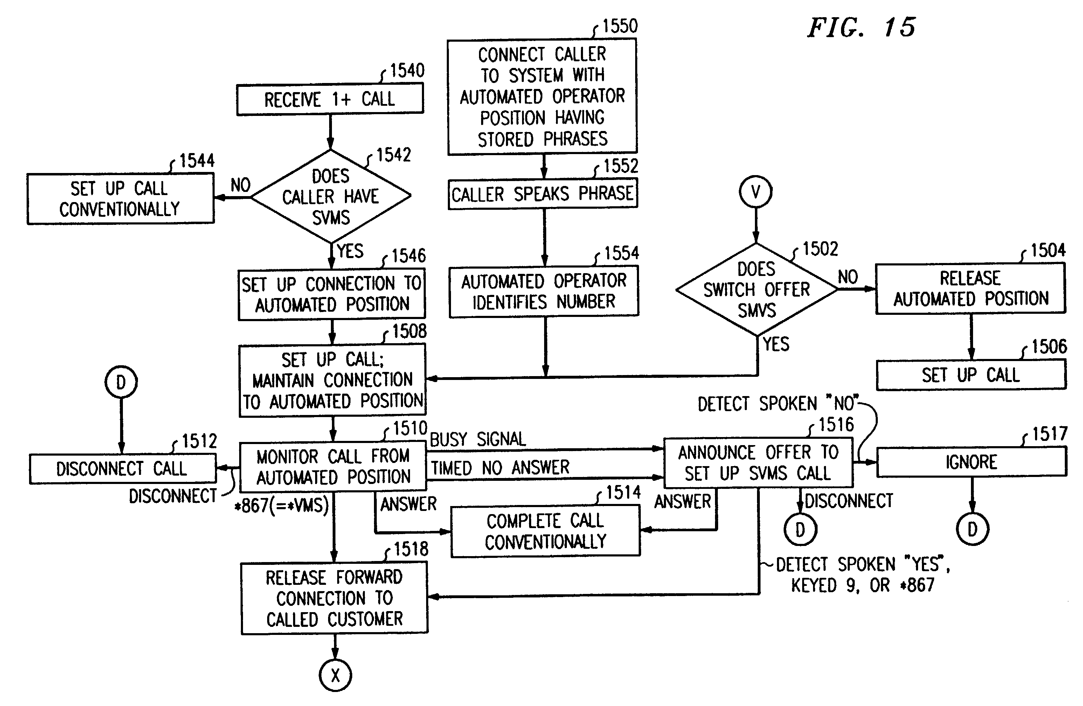

The automated calling card service program including blocks 211, 212, 220, and 224 are performed under the control of switch control 12. First, the calling card number that has been keyed is passed from the automated position to the switch controller 12 (action block 211). The switch controller 12 applies standard ACCS checks (action block 212). These checks include a check for the correct number of digits, a query of a remote data base to ensure that the account number is valid, and a check that card billing is allowed from that calling number to that called number. If the calling card is found to be valid in test 220, then the call is processed by a program for processing ACCS calls that is a part of the program of control 12 (action block 224); checks for possible spontaneous voice messaging are performed as described hereinafter with respect to FIG. 15. If the calling card number is not valid as determined in test 220, then the actions to be described below for reprompt announcements starting with action block 302 are performed in the automated position.

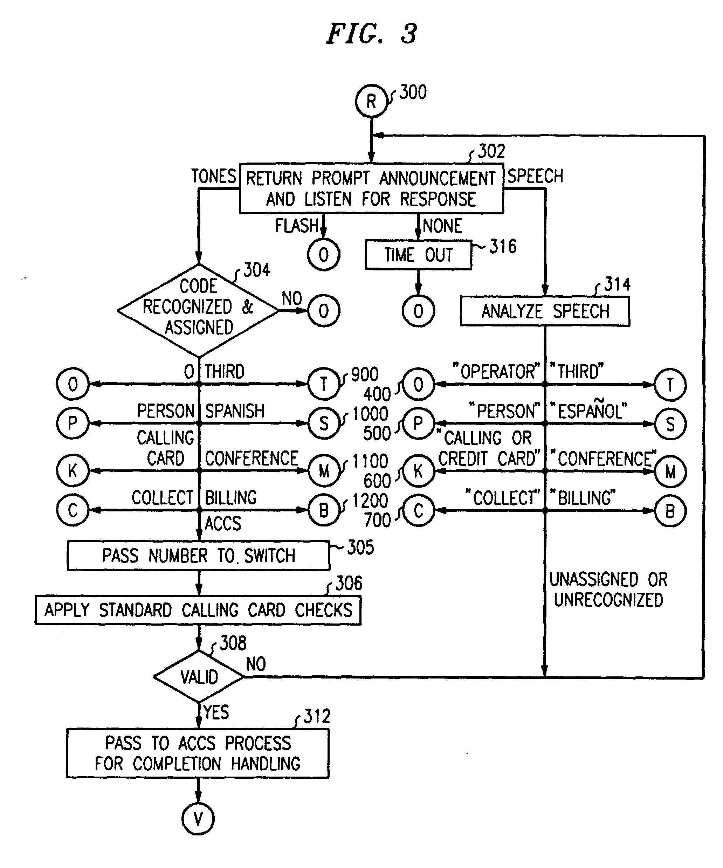

If no code is recognized (test 206) or if no tones have been transmitted from the customer to the system within a predetermined interval (timeout, action box 205), the voice processing unit 1405 (FIG. 14) of automated position group 50 returns a prompt announcement such as "Please say collect, calling card, person, third number, español, conference, billing, or operator now," and awaits a response by the calling customer (action box 208). If tones are detected when this announcement has been made, test 210, similar to test 206, is performed. Test 210 checks the code represented by the tones keyed by the calling customer. If these tones correspond to a calling card number, the program executes a transfer to action boxes 211 and 212 in order to apply the standard Automated Calling Card Service (ACCS) treatment. If one of the operator assistance command codes is recognized, a transfer to the corresponding subroutine is executed. If an unrecognized code has been keyed, a transfer is executed to subroutine R (subroutine 300, FIG. 3) to give the calling customer a reprompt announcement.

If decision boxes 208 or 204 recognize speech, then this speech is analyzed (decision box 214) in order to detect one of the types of operator assistance calls, or to detect that the speech signal is inadequate to properly classify the type of operator assistance call. If a request for one of the classes of operator assistance calls is recognized, then a transfer is made to one of the subroutines O, C, K, P, T, S, M, or B; if no command corresponding to an operator assistance call is so recognized, a transfer is made to subroutine R (subroutine 300, FIG. 3) for a reprompt announcement.

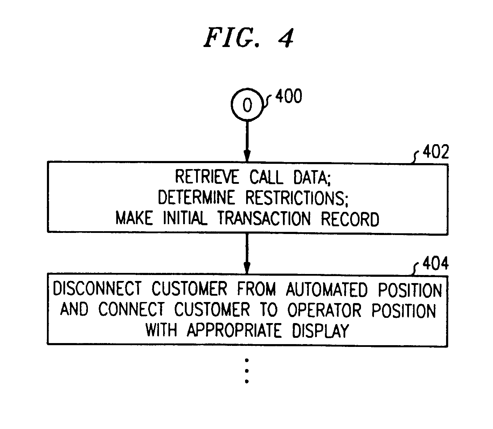

If, at the time that the caller response is analyzed in decision box 204, a customer flash is recognized, a transfer is made to subroutine O (subroutine 400, FIG. 4) in order to connect the customer to an operator. A customer may flash in order to be connected to an operator. Similarly, if, following the prompt announcement (decision box 208), the customer flashes, a transfer is made to the subroutine O (subroutine 400, FIG. 4). If the customer does nothing following the prompt, a timeout is detected in action box 216 and a transfer to subroutine O (subroutine 400, FIG. 4) is executed in order to connect the calling customer to an operator.

FIG. 3 illustrates the actions performed by the program in case the customer response is unrecognizable speech or an unassigned pair of DTMF signals. The first step of subroutine R (300) is to reprompt the caller with an announcement and listen for a response (decision box 302). If tones are recognized, test 304, analogous to tests 206 and 210, is performed. Test 304 checks for a calling card number, in which case, after checking (306) and validating (test 308) the calling card, standard automated Calling Card Service treatment is applied (action box 312), or one of the codes representing classes of operator assistance calls is recognized, in which case a transfer is executed to one of the subroutines O, C, K, P, T, S, M, or B. If an invalid calling card number is supplied, action block 302 is reentered. Along with the execution of block 312, checks for possible spontaneous voice messaging are performed as described hereinafter with respect to FIG. 15. Finally, if following the reprompt announcement to the caller, a number is keyed which does not correspond to a legitimate code, the calling customer is connected to an operator (transfer to subroutine O, 400, FIG. 4). Similarly, if a flash is recognized while the customer is responding, a transfer is made to subroutine O to connect the calling customer to an operator. If speech is recognized, the speech is analyzed in decision box 314. The decisions for decision box 314 are the same as those for decision box 214 except that in this case, if after the reprompt announcement to the caller the speech data is still unrecognized, the calling customer is connected to an operator. Alternatively, at the choice of the switch owner, the call is terminated after failure. If the customer says nothing, does not key in a tone signal and does not flash, then action box 316 detects a timeout and the customer is connected to an operator.

The reprompt announcement routines of decision box 302 are invoked in large part because of the imperfect characteristics of automatic speech recognition. Whereas it is possible to detect tones with essentially 100 percent accuracy, it is not always possible to make a correct determination of a customer's spoken command. The use of a reprompt announcement and decision box 302 allows a second identification of the customer's command based on a new speech sample. It is possible that human factors tests may indicate that the reprompt announcement should state the suspected spoken term, if any. (For example, the announcement may say: "Did you request a collect call?") Recognition of some spoken command may be forced or a "no command recognized" state allowed.

FIG. 4 indicates the actions to be carried out if the calling customer is to be connected to an operator. Subroutine O (400), first retrieves data about the calling number, the called number, and any other pertinent data about the status of the call so that the operator is fully informed and prepared to deal with the calling customer. Data about either party, but especially the called party, may be obtained from a remote data base system such as data base system 20 (FIG. 1). This data includes restrictions on either the calling or the called customer (for example, that the calling customer can only make collect calls or that the called customer will not, or, because it is a public coin station, cannot, accept any collect calls). Next, the calling customer is connected to the operator whose operator position has been initialized with that subset of the data retrieved in action box 402 (action box 404) which is pertinent to this type of call. The term "pertinent data" as used herein refers to that subset of accessed data which is pertinent to the call. Subsequently, the operator processes the call in a standard manner.

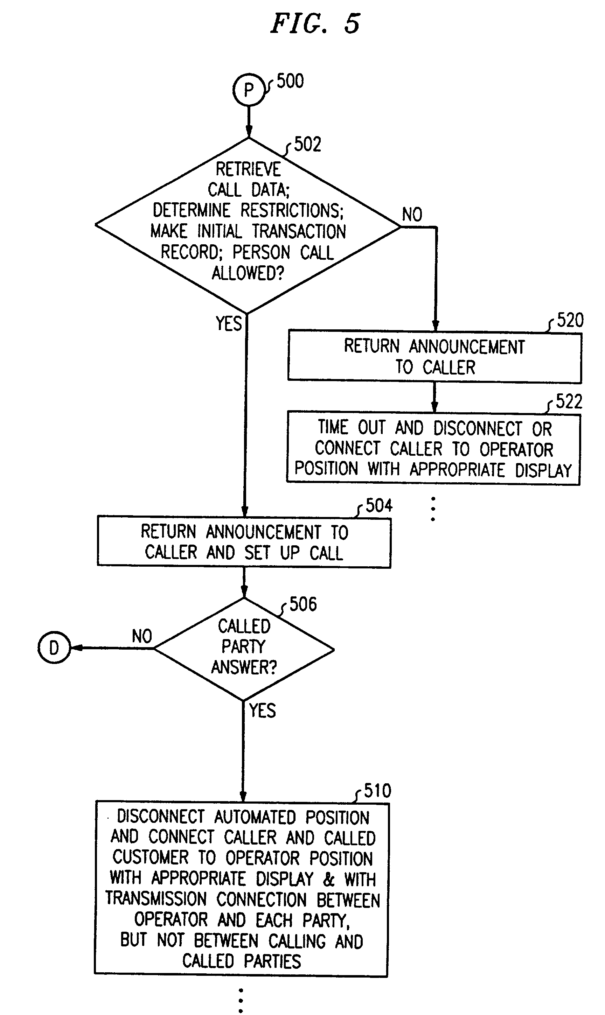

FIG. 5 represents subroutine P (500), the program used for controlling person-to-person calls. The first step (decision box 502) is to retrieve data conceming called and calling parties and determine if there are any restrictions on either party to make person-to-person calls or receive such calls. For example, many prisons allow their inmates to place only collect calls; the operator processing a person call needs to know of this restriction. If a person call is allowed, then an announcement is returned to the calling party (action box 504). This announcement will indicate to the calling customer that the call is being set up. In parallel with this announcement a connection is set up from switch 1 to the called customer. Test 506 determines whether the called customer answers. If the called customer does not answer within a predetermined interval, checks for possible spontaneous voice messaging are performed as described hereinafter with respect to FIG. 15. If the calling customer disconnects before that predetermined interval, the call is similarly disconnected. If the called party answers, then the called party is connected through switching network 12 to an operator position which has been initialized with the pertinent data that has been collected for the person-to-person call (action box 510). The operator may then talk with either the calling or the called party, but under operator control the calling and called parties cannot talk to each other. Based on input received by the operator in talking to the two customers, the operator will either allow the call to be completed or will disconnect the call. It is desirable to connect person and collect calls in such a way that until billing is verified, the calling and called customers are not connected, and that for bill to third number calls, the calling and third number customers not be connected. This prevents unauthorized and unbillable communications between the calling and called or third number customers, as well as some more complex fraud schemes.

In setting up a person-to-person call in accordance with the methods described herein, it is important that an operator be attached quickly once the called customer picks up. While operator assistance calls are normally placed in an operator assistance request queue to handle calls in an orderly fashion based on time of arrival of the call, person-to-person calls processed as described herein may be placed in a special priority queue to reduce sharply the interval from the time that a called customer answers until an operator is attached to the call. As soon as the called customer answers, the call may be placed in the priority queue and an announcement may be connected to the called customer which states: "Please hold for a person-to-person call." As soon as an operator is available, that operator is connected to the calling customer in order to ascertain the identity of the desired called customer. The operator then requests a connection to the called customer and can talk to either the calling or the called customer without having the calling and called customers talk to each other. The operator ascertains whether or not the call should be completed and the call is either completed or disconnected in accordance with the operator's keyed request.

Note that the automated position could handle the functions of either or both of the MECH operators (referenced in the second paragraph of the Problem statement) according to the quality of the speech recognition equipment and the cost of the automated position, without changing the program of the operator assistance switch. The flexibility offered by an automated position which, effectively, mimics a limited set of operations of an operator position makes this possible.

If the calling customer is violating a restriction in attempting to place a person-to-person call (detected in decision box 502) an announcement is returned to the calling customer (action box 520). If the calling customer then hangs up, the call is simply disconnected. If the calling customer does not hang up within a predetermined interval, then, at the option of the telephone company, the calling customer can either be automatically disconnected or can be connected to an operator whose position will have been initialized with a display containing the pertinent data necessary to communicate with the caller about this call (action box 522).

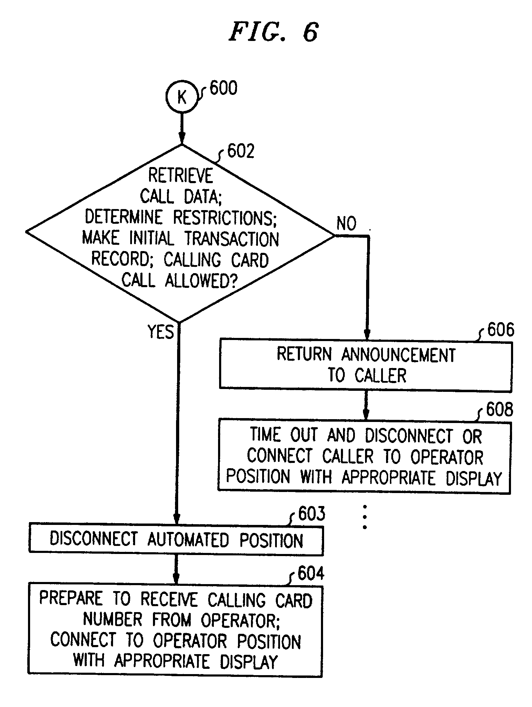

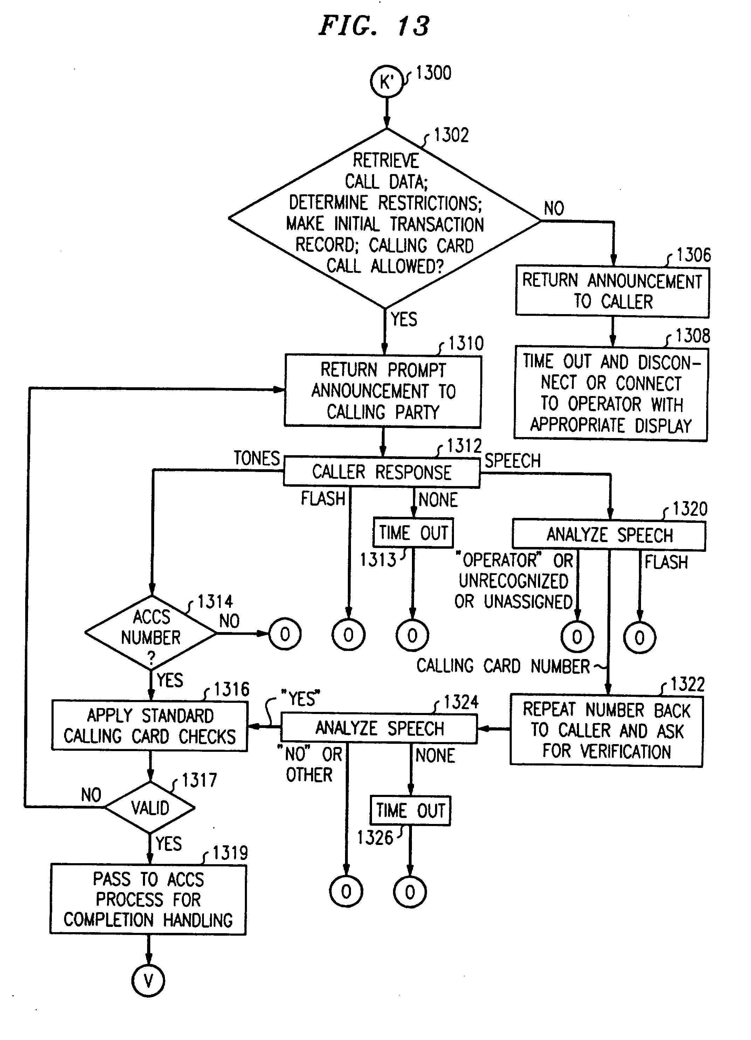

FIG. 6 is a flow diagram of subroutine K (600) for controlling certain calling card calls. Subroutine K of FIG. 6 is entered if the calling card customer is not calling from a DTMF terminal, but wishes to place a calling card call, or if the customer, for some other reason, wishes to speak instead of keying the calling card number. (An alternative version of subroutine K, namely, subroutine K'(1300), is shown in FIG. 13 and is described hereinafter.) Decision block 602 describes the initial actions carried out for such calls. The system retrieves data concerning the calling and called customer to see if there are any restrictions, and determines whether a calling card call is allowed. If a calling card call is allowed, then the control 10 is primed to receive a calling card number keyed in from the operator, i.e., to interpret numerical data keyed in by the operator as representing a calling card number. A connection is set up between the calling customer and the operator whose position has been initialized with a display indicating the characteristics of the call and additional pertinent data about the calling and called customers (action box 604).

If it is determined that a calling card call is not allowed, then an announcement is returned to the calling customer (action box 606). If the calling customer hangs up, the call is disconnected; otherwise, after a predetermined interval, the calling customer is either automatically disconnected or connected to an operator whose operator position has been initialized with the pertinent data (action box 608) so that the operator can explain to the customer what happened.

For serving calling card calls, it may be desirable to recognize "credit card" as well as "calling card" as a legitimate command. Many customers still use the term "credit card" when they refer to a telephone calling card.

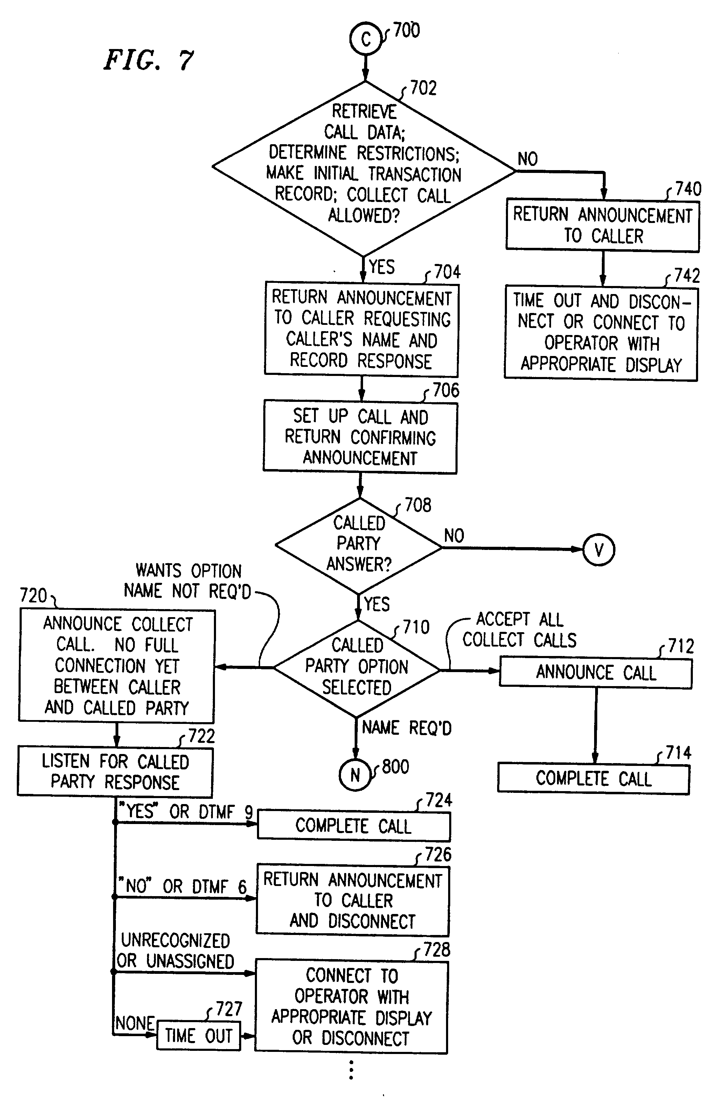

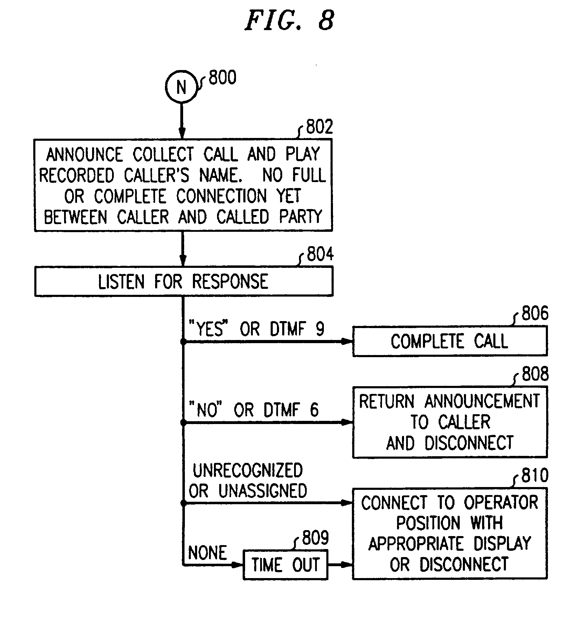

FIG. 7 is a flow diagram of subroutine C (700), the program used for processing collect calls. Initially, (decision block 702) the data for the calling and called customers is obtained in order to check for restrictions. In this case, the restrictions tend to be dependent on the called customer as described with respect to the example call. An initial record is made using transaction recorder 22. If collect calls are allowed then an announcement is connected to the calling customer. This announcement requests the calling customer to speak his/her name so that the name can be recorded for possible subsequent transmission to the called customer (action box 704). (Alternatively, the actions of blocks 704 and 706 can be deferred to precede block 802 in order to avoid incurring access charges unless absolutely necessary. The same remark applies to moving blocks 907 and 909 to precede block 927.) The call is then set up and an announcement confirming reception of the calling customer's name response is returned to the calling customer (action box 706). Test 708 checks whether the called party answers before a predetermined interval has elapsed. Then test 710 is performed to select among the options of the called party. If the called party accepts all collect calls, then optionally an announcement is connected to the called party to announce that a collect call is being set up to the called customer (action box 712) and the call is completed (action box 714). If the called customer wants to make a decision on every call as to whether or not she/he will accept the call but does not require the name of the calling customer, then the called customer is connected to an announcement (action box 720). The announcement might announce a message such as: "You have a collect call, will you accept charges, yes or no". The voice processing unit which has already been used for making the announcement is then primed to listen for a called party response (decision box 722). If the called party responds a "yes", either verbally or by keying, say, a 9 (= Y for "yes"), recognized by the automated position, then the call is completed (action box 724). If the called customer announces "no", either verbally or by keying a 6 (= N for "no") recognized by the automated position or by disconnecting, then an announcement is returned to the calling customer and the call is disconnected (action box 726). If the automated position either does not recognize the called customer's response, or recognizes it but recognizes it as not being either yes or no, or if no response is made by the called customer within a predetermined interval (timeout, action box 727), then both the calling and the called customers are connected to an operator position which has been initialized with a display indicating the status of the call and the pertinent data, in such a way that either the calling or the called customer can talk to the operator, but that the calling and called customers cannot talk to each other. The operator may then take appropriate action to either disconnect the call or to let the call complete with appropriate charging (action box 728). If the called party has selected the name required option, a transfer is made to subroutine N (800) described with respect to FIG. 8.

If the called customer does not answer within the predetermined interval, checks for possible spontaneous voice messaging are performed as described hereinafter with respect to FIG. 15.

If no collect call is allowed to this called customer, for example, if the called customer terminal is a public coin station, then an announcement is returned to the calling customer (action box 740) and if the calling customer fails to disconnect within a predetermined interval, the calling customer is either automatically disconnected or connected to an operator whose display indicates the status of the call and pertinent data (action box 742).

Using this arrangement, it is also possible to implement a service similar to present "Enterprise" service, a type of "automatic" collect call, without requiring the use of an operator. The data base for the called customer indicates for which originating area plus office codes the called customer will accept collect calls. Calls from one of these area plus office codes are then automatically accepted.

Part of the reason for making an initial transaction record as one of the first steps of subroutine C (700) is to allow for possible attempt charges for collect calls not completed because of a restriction or decision by a called customer.

FIG. 8 is a flow diagram of subroutine N used to control collect calls where the called customer has requested that collect calls be announced including the calling customer's name. The announcement of the collect call, in this case, will also include the caller's name previously recorded in action box 704 of FIG. 7 (action box 802). The automated position is then primed to listen for the called customer's response (decision box 804). If the response is recognized as "yes" or keyed 9, the call is completed (action box 806). If the response is recognized as "no" or keyed 6, then the previously cited announcement is returned to the calling customer and the call is disconnected (action box 808). Finally, if the response of the called customer is either unrecognized or represents an unassigned phrase (i.e., neither yes nor no) or if no response is detected within a predetermined interval (timeout, action box 809), then the calling and called customers are both connected (action box 810) to an operator position which is initialized with a display indicating the status of the call and pertinent data retrieved in decision block 702 (FIG. 7). The operator can then make a decision as to whether to complete the call or disconnect the parties. As in the case of action box 728, the called and calling parties cannot talk to each other while both are connected to the operator position.

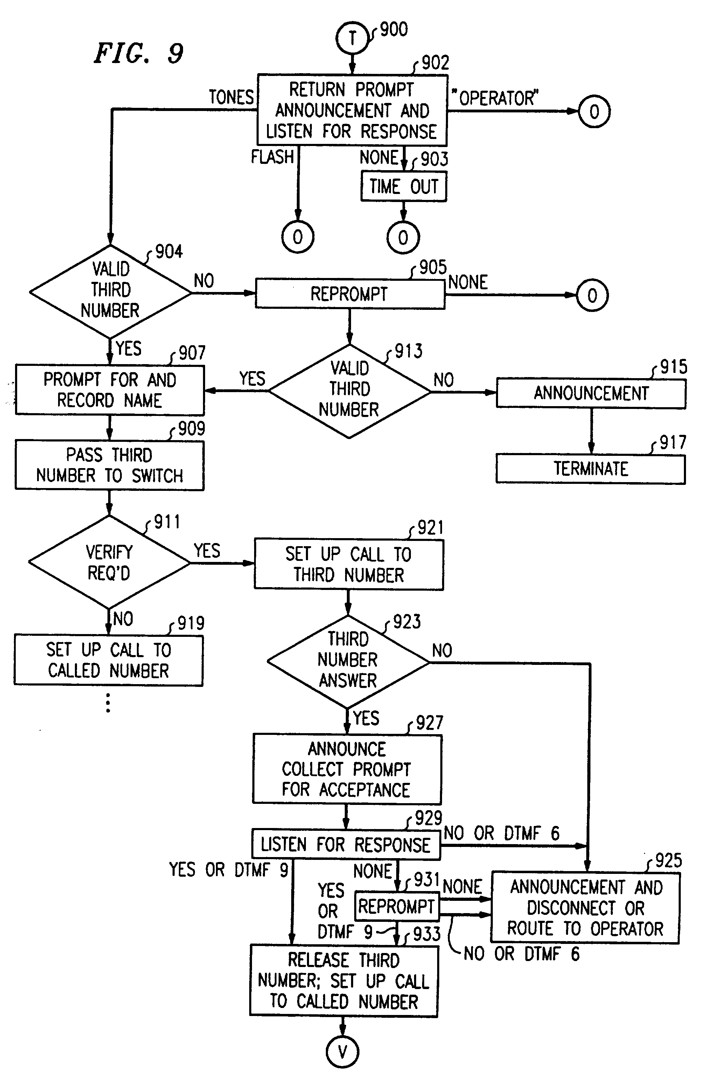

FIG. 9 is a flow chart of subroutine T (900) for controlling calls to be billed to a third party. A prompt announcement is returned from the automated position which then listens for a response (action block 902). If the response is "operator" then routine O is entered. If the customer flashes, routine O is entered. If there is a timeout (action block 903) then routine O is entered. Finally, if tones are detected, these are accumulated and tested to see if they represent a valid third number (test 904). If not, the customer is given a reprompt (action block 905) requesting that the third number be keyed. If, in response to this, the customer flashes, times out, or says "operator", then the routine O is entered. If the customer keys a number, this number is tested to check if it is a valid third number (test 913). If not, an announcement is played to the customer from the automated position (action block 915) and the call is disconnected (action block 917). If a valid third number has in recognized in test 913 or in test 904, then the customer is prompted to announce his or her name (action block 907). This is recorded. The third number keyed by the customer is sent as a data message to switch control 10 (action block 909). Switch control 10 then determines whether a verification of the request to charge that number is required (test 911). If no verification is required, the call is set up to the called number (action block 919) under the control 10 of switch 1 and the automated position is disconnected. If verification is required, the connection is set up to the third number (action block 921). Test 923 determines whether the third number answers. If not, then an announcement is returned from the automated position and the call is disconnected or, according to the option of the operating telephone company, the call is set up to an operator position (action block 925). If the third number does answer, then the type of call is announced and the third party is prompted to speak or key an acceptance (action block 927). The automated position listens for a response from the third party (action block 929). If no response is forthcoming, then the actions previously described for action block 925 are carried out. If the third party responds with a "yes" or keys DTMF 9, then the third number is released and the call is set up to the called number (action block 933), checks for possible spontaneous voice messaging are performed as described hereinafter with respect to FIG. 15. If the third party responds "no" or keys a DTMF 6, then the actions previously described with respect to action block 925 are carried out. If the third party does not respond, a reprompt is given from the automated position (action block 931). If, in response to the reprompt, the third number answers "yes" or keys in DTMF 9, then the call is set up as previously described with respect to action block 933. If, in response to the reprompt, the third number replies "no" or keys DTMF 6, or does not reply, then the actions previously described with respect to action block 925 are carried out.

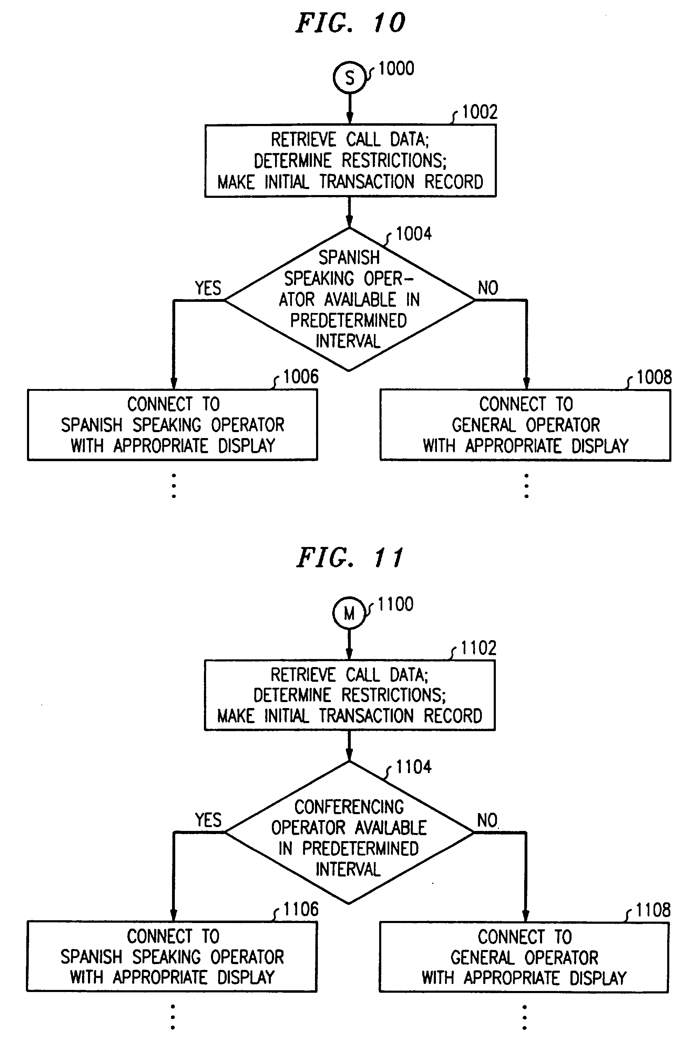

FIGS. 10-12 deal with calls requiring the use of special operator teams. Three types of special operator teams are described herein: a Spanish-speaking team for handling operator assistance calls from customers who prefer to use Spanish in their communication with telephone operators, a second team for setting up conference calls, and a third team associated with a customer credit and service bureau for handling customer inquiries on billing and for handling requests for refunds. Other specialized teams such as teams speaking languages other than English and Spanish could also be used for handling special categories of calls. Furthermore, it may be desirable to have operator teams which specialize in particular classes of operator assistance calls such as a team which specializes in person-to-person calls. The use of access codes keyed by customers with DTMF terminals, or spoken commands, can be used to route calls to an appropriate team. In order to utilize operators most efficiently, it may also be desirable to have traffic flow between teams where there is a temporary overload on one of the teams.

FIG. 10 is a flow diagram for subroutine S (1000) for responding to a spoken or keyed request for a Spanish-speaking operator. The system first retrieves the call data for the originating customer and data associated with the called number in order to prepare to set up an initial display for the operator who will handle this call. In addition, an initial transaction record is made in order to prepare for future billing of this call (action box 1002). Next, a test is made (decision box 1004) of whether a Spanish-speaking operator (i.e., an operator on the specialized Spanish-speaking team) will be available within a predetermined interval. If so, then the customer is connected to a Spanish-speaking operator (i.e., a member of the specialized Spanish-speaking operator team) whose operator position has been initialized with the display of pertinent data generated by the control of switch 1 (action box 1006). Thereafter, the call is processed in essentially the same way as calls to the general operator (as described with respect to FIG. 4). If no Spanish-speaking operator is available within the predetermined interval, as indicated by the length of the queue of requests for a Spanish-speaking operator, then the call is connected to a general operator whose position will be initialized with the appropriate display of pertinent data (action box 1008). This general operator will then handle the call in the same way as other general operator assistance calls.

FIG. 11 is a flow diagram of subroutine M (1100) which is entered when a customer either dials the access code for a conference call operator or when the customer speaks the word "conference". FIG. 11 is very similar to FIG. 10 except for the fact that the conference operators have access to special facilities not available to members of some other operator teams for setting up multi-party conference calls. Initially, the system retrieves the account data for the calling customer and, if the calling customer has already dialed at least one number of a multi-party conference call, then establishes a connection for any such called customers on this call. The system then makes an initial transaction record for subsequent billing processing (action box 1102). Next, decision block 1104 shows a test to see whether a conference operator will be available within a predetermined interval. This test is based on the length of the queue for conference operator requests. If a conference operator will be available within a predetermined interval, then as soon as a conference operator is available the calling customer will be connected to a conference operator-, the operator position will be initialized with the display of pertinent data gathered by the control of switch 1 (action box 1106). Otherwise, if no conference operator is available within the predetermined interval, the calling customer will be connected to a general operator whose operator position will be initialized with the appropriate display of pertinent data (action box 1108).

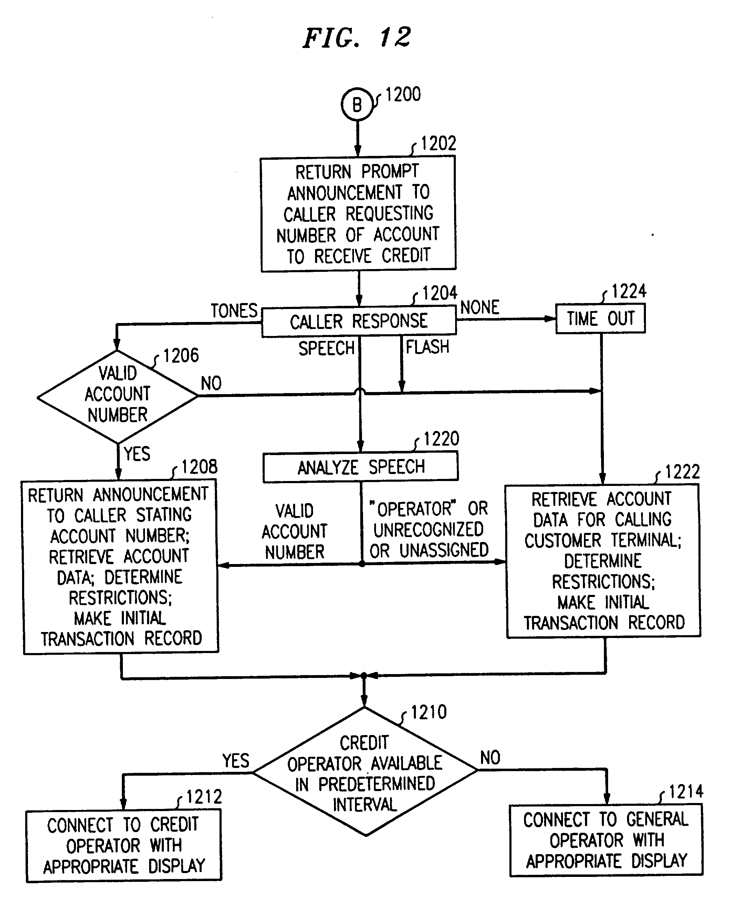

FIG. 12 is a flow diagram of subroutine B (1200) entered when the code for a request for an operator from the customer credit and service bureau has been keyed by a customer with a DTMF terminal or the word "billing" has been spoken by a customer. In order to reduce the work time of an operator from this bureau, a prompt announcement is returned to the calling customer requesting the number of the account to receive credit. This number, in general, is the customer's directory number, but may also be a third number which is to receive credit in case the customer query is with respect to a bill to third number call, or may be a calling card number (action box 1202).

In response to the prompt announcement, the customer who is connected to an automated position (action block 200) may key in a number if he has a DTMF terminal, may speak a response, may flash, or may do nothing. Test 1204 determines which of these actions has been taken by the customer. If the customer keys in a number, test 1206 is used to determine whether the number is a valid account number. If the number keyed in is a valid account number, then an announcement is returned to the caller stating the account number to allow the customer, to verify that the proper account is being handled, and data is retrieved from the data base of the customer credit and service bureau (action box 1208). One way that this data could be retrieved is if the data were located in a remote data base such as data base 20, accessed via data network 18 (FIG. 1). From the retrieved data the restrictions on the calling customer are determined and the system then makes an initial transaction record of this call (action box 1208). This initial transaction record is available for possible use in generating traffic data, and, as an initial record for possible use in conjunction with additional information, to provide appropriate credit to the proper account. Such initial records may also be useful to identify customers who generate excessive numbers of billing requests. The initial transaction record may also contain data which can be useful for subsequent analysis in order to identify possible sources of fraud.

At this point, the system is ready to connect a credit operator and in test 1210 a determination is made whether a credit operator will be available within a predetermined interval. If a credit operator (i.e., an operator from the customer credit and service bureau) is available, a connection is set up from the calling customer to the credit operator; the credit operator position is initialized with a display of the pertinent data gathered by the system (action box 1212). If no credit operator will be available within the predetermined interval, the customer is connected to a general operator whose operator position will be initialized with the appropriate display of pertinent data (action box 1214).

Returning now to test 1204 which checks on the response of the calling customer to the prompt announcement, if the calling customer's response is a spoken message, this message is analyzed (decision box 1220). If the message consists of a series of numbers representing a valid account number, then action box 1208 is entered in order to return an announcement to the customer stating the account number, to retrieve account data, and determine restrictions and make an initial record as previously described. If the customer's message consists of the word "operator", then the system retrieves the account data for the calling customer terminal, determines the calling customer restrictions and makes an initial transaction record (action box 1222). At this point, the system is ready to set up a connection to a credit operator by entering test 1210 for credit operator availability as previously described.

The action box 1222 is also entered if the customer's speech is not recognized by the system as representing an account number, in the same way as if the customer had spoken the word "operator". Also, if the account number spoken by the customer or keyed by the customer is not valid, then, action box 1222 is similarly entered. Finally, if the response to the prompt announcement as determined by decision block 1204 is either a flash or the customer fails to respond within a predetermined interval as detected by time out block 1224, action box 1222 is similarly entered.

Note that the facilities of the voice processing unit are used extensively in this subroutine to minimize the amount of data which is transmitted verbally from the calling customer directly to the credit operator, as a result, the work time of the credit operator is substantially reduced.

FIG. 13 is a flow diagram of an alternate method of handling calling card calls by customers who have not keyed in their calling card number. In the alternate method of FIG. 13, represented by subroutine K'(1300), spoken calling card numbers are recognized. The initial step (action box 1302) for subroutine 1300 is the same as the initial step (action box 602) for subroutine 600. Further, if it is determined that no calling card call is allowed, the actions represented by action box 1306 and 1308 are the same as the action boxes 606 and 608 of subroutine K (600). However, if a decision is made that a calling card call is allowed, then a prompt announcement is returned to the caller (action box 1310). The caller response is analyzed (decision box 1312). If the caller has keyed tones, test 1314 determines whether these tones represent a calling card number: if not, the customer is connected to an operator, if so, after checking (action block 1316) and validating (test 1317) the calling card number, standard automated Calling Card Service treatment (action box 1319) is accorded to the calling customer, checks for possible spontaneous voice messaging are performed as described hereinafter with respect to FIG. 15. If the number is not valid (negative result of test 1317) the system returns control to action block 1310. If the caller's response to the prompt announcement is either a flash or no response within a predetermined interval (timeout, action box 1313), then subroutine O is entered and the caller is connected to an operator. If the caller speaks, this speech is analyzed in decision box 1320. If the speech is interrupted by a flash or the customer's response is anything else other than a calling card number, or if the customer does not respond within a predetermined interval, subroutine O is entered and the calling customer is connected to an operator. If the calling customer speaks a calling card number, this number is repeated back to the caller (action box 1322) along with a request that the caller verify the calling card number. The caller's response is analyzed in decision box 1324. If the response is recognized as "yes", then standard automated Calling Card Service treatment is provided for this call (action box 1316). If a "no" is recognized or any other speech is recognized, or if there is no response within a predetermined interval (timeout, action box 1326), a transfer is made to subroutine O and the customer is connected to an operator. If experience indicates that it is not necessary to repeat calling card numbers to the calling customer, this step can be bypassed at the option of the telephone company. This is entirely possible since all calling card numbers are verified and it is unlikely that recognition errors would result in a valid calling card number.

Note that in all of the sequences described above, a customer is connected to an operator if a customer having a DTMF terminal keys a 0, if a calling customer flashes, or if the automatic speech recognition system fails to recognize an appropriate expression after appropriate reprompt tones or announcements.

While this description has been in terms of having customers key longer sequences of digits such as calling card numbers or third numbers, it is also possible to have customers, especially those calling from rotary dial stations, speak the numbers and to use the automated position to recognize the spoken numbers. The sequences following the recognition of a series of spoken numbers are essentially the same as the sequences following the recognition of a series of DTMF signals. The invention described herein may be readily updated to incorporate improved speech recognition technology to recognize long strings of digits as such technology becomes available.

FIG. 14 is a block diagram of an automated position group 50. The automated position group is connected via four ISDN digital subscriber lines grouped into entity 49 to corresponding ISDN T-interface line cards 1417 in switching network 12 of the operator assistance switch. Each of these digital subscriber lines is terminated to an ISDN Personal computer Interface Board (IPIB) 1401. This personal computer interface board 1401 has as outputs both a D-channel output 1421 for conveying data messages between the switching network and the control equipment of the automated position group and a voice-channel output 1423 for communicating with an automated position TIP/RING (T/R) interface module 1403. The interface module 1403 includes common circuits 1404 for interfacing to the time division multiplex bus 1415 and to four individual voice interface circuits 1402 for interfacing with the B-channels of the four ISDN interface boards 1401. The T/R interface module 1403 reconverts the analog voice-channel output of the IPIB to a digital signal; provides a line-equivalent balancing network (in contrast to the IPIB which provides an operator position equivalent balancing network); and provides the equivalent of DTMF receivers for detecting DTMF. The B-channel carries voice signals and DTMF tones from the calling or called customers connected to the line card 1417. The TIP/RING interface module 1403 conveys voice signals to time division multiplex bus 1415 for communication to the speech processing board 1405. The speech processing (SP) board processes speech signals and communicates with personal computer 1407 over an Advanced Technology (a common PC state of the art) bus 1413. The SP provides announcements and prompts, and receives spoken input which it processes to recognize the words of that input. It is also used for recording a spoken name (for example, for collect calls) and applies speech recognition grammar rules. Bus 1413 is a 32 bit PC bus for communicating among the blocks connected thereto. Local Area Network (LAN) interface 1419 is used to control bus 1413. The speech processor board identifies the spoken input and passes this data to PC 1407 which applies additional grammar checks using a software data interface process. Memory 1409 is a PC expansion memory, a random access memory (RAM) to provide adequate RAM for the PC. The disk 1411 is a standard PC disk used for storing system software, drivers, program, office data, and digitized announcement and prompting phrases. The PC communicates data messages over one of the D-channels 1421 to one of the line cards 1417 and receives messages from the operator assistance switch over the same D-channel. A particular call is associated with a particular D-channel and line card while being served. The messages that are exchanged over this D-channel are exactly the same messages as are used in communicating with an operator position staffed by a human being and used for controlling the display of that operator position and for sending data representing information keyed by the operator to the operator assistance switch.

The arrangements of FIGS. 1 and 14 can also be used to offer spontaneous voice message service. If these arrangements are used for this purpose then the call completion action blocks are augmented by the sequence of the actions shown in the flow diagram of FIGS. 15-16. The augmentation is to offer spontaneous voice messaging service in case the call cannot be completed because the called party is busy or does not answer.

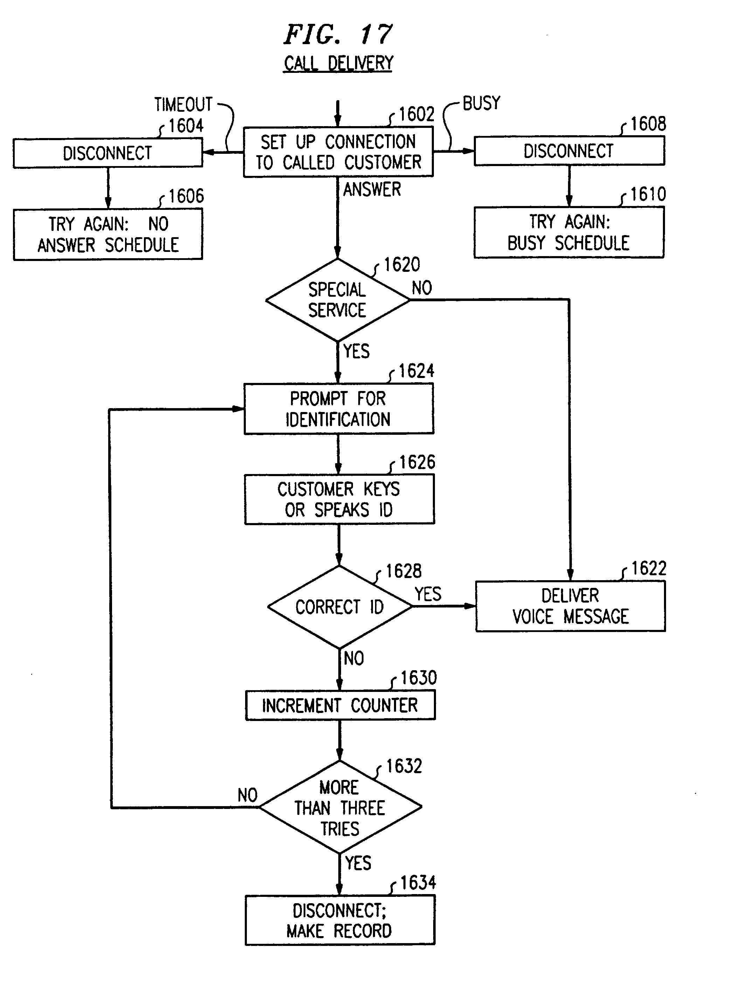

Test 1502 is used to represent a test to check whether the switch offers spontaneous voice message service. In practice, such a test would not be required since if the switch did not offer spontaneous voice message service, the details of FIGS. 15-16 simply would not be implemented. However, to show the flow of actions, if the switch does not offer spontaneous voice message service, then the automated position is released (action block 1504) and the call is set up in the conventional way (action block 1506). If, however, the switch does offer spontaneous voice message service, then the call is set up but the connection to the automated position is maintained (action block 1508). The call being set up is monitored from the automated position (action block 1510). If a disconnect is detected the call is disconnected (action block 1512). If an answer is detected, the call is completed conventionally (action block 1514). If a busy signal is detected or a timed no-answer is detected, then an offer to set up a VMS call is announced to the caller (action block 1516) from the automated position (action block 1516). During the announcement, if an answer is detected then the call is completed conventionally (action block 1514). If a spoken "no" is detected, the spoken "no" is ignored (action block 1517) in order to allow the caller to wait for a possible answer and to detect a disconnect leading to the disconnection of the call (action block 1512) after the customer stops waiting. However, if the customer, after responding "no" to the VMS prompt, continues to wait for a possible answer and exceeds a specified time-out period, the caller will be prompted for a final time (i.e., 1516), if a "no" is detected, the call will be disconnected (i.e., 1512). If a spoken "yes", a keyed 9 (for y or yes) or a keyed ∗867 (equals ∗VMS) is detected, then the forward connection to the called customer is released (action block 1518). The same action is performed if the calling customer keys ∗867 prior to the time of a timed no-answer. Following action block 1518, a test is made to see if the call is a collect call (test 1520). It would be against telephone company policy to allow collect calls for voice message calls since the voice message recipient has no opportunity to deny the collect call. It is, of course, possible in the future that a check can be made to see if the called number accepts collect voice message calls in which case a positive result of such a test would be treated in this flow chart as the equivalent of a "no" on the collect call test. At any rate, if the output of test 1520 is positive, then an announcement is made to the caller to offer a calling card option (1522). If this offer is refused (as detected by a disconnect or the absence of a spoken "yes" or keyed 9) then the call is disconnected. If the offer is accepted, then the call is completed as a VMS calling card call including obtaining the customer's calling card number. Further, details of special call types are entered in the record of the voice message call to prepare for the special call delivery option described with respect to FIG. 17. If the call was not a collect call, a test is made whether the call was a calling card call (test 1526). If so, then the actions of block 1524 excluding the actions of obtaining the calling card number are performed to complete this as a VMS calling card call.

If this was not a calling card call, then alternate billing is offered for this VMS call (test 1528). If the offer is accepted by the customer saying "yes" or keying a DTMF 9, then action block 1531 is executed. Otherwise, action block 1530 is executed and the VMS call is completed using the present type of billing. This action includes recording special call type details if necessary. Action block 1531 is an announcement asking how the calling party would be to pay for the call. If the calling party says "station paid" or keys DTMF 1, then test 1532 is executed. If the calling party says "calling card" or keys DTMF 2, then action block 1524, previously described, is executed. If the calling party says "bill to third" or keys DTMF 3, then action block 1539 is executed. Otherwise the call is disconnected (action block 1512). Action block 1539 requests the third party number and checks for acceptance in generally the same way as discussed previously with respect to blocks 923 et seq. If the charge is accepted, then the SVMS call is completed as a bill to third party call (action block 1540). Otherwise, if the charge is rejected, the call is simply disconnected (action block 1512).

If, in response to the announcement of action block 1531, the customer stated "station paid" or keyed DTMF 1, then test 1532 is performed to check whether the call is from a coin station. If not, test 1533 is performed to check whether the call is from a hotel having individual room billing. If not, then the spontaneous VMS call is completed and billed as a sent paid call (action block 1536). If the call is from a hotel, then an announcement is made to request the hotel room number from the caller (action block 1534). If the room number is successfully obtained, then the SVMS call is completed as a bill to hotel room call (action block 1535). If the caller fails to supply the hotel room number, the call is simply disconnected (action block 1512).

If test 1532 determines that the call is from a coin station, then the amount of the charge for an SVMS is determined and the required deposit is requested. If the customer fails to deposit this amount of money then the call is disconnected (action block 1512). Otherwise, the call is completed as an SVMS coin call (action block 1538).

The calls which are established using the methods of this specification are voice calls, data calls and facsimile calls.

An additional service which can be offered using the facilities of an automated operator is the following. Customers are assigned a specific individual telephone number which may be a number in the 1-700, 1-800, or 1-900 block which will be routed to a switching system containing prerecorded phrases in the voice of that customer. These phrases might be phrases such as: "Mom," "Broker," "Office," "Home," "Secretary," "Bob," "Betty," etc. The customer would dial his or her personal number, would be connected to this switching system and the switching system would select the prerecorded phrases based on that customer's specific number. Then, when the customer speaks, one of the prerecorded phrases, the automated operator system would match that phrase against one of the prerecorded phrases to determine the destination desired by the customer. Once that destination has been determined, the directory number of that destination is found and the call is completed to that directory number. Subsequently, if the call is to a busy telephone or is not answered spontaneous voice message service can be invoked. These actions are described with respect to blocks 1550, 1552, and 1554. Block 1550 indicates that when the customer dials this personal number, that caller is connected to a system having an automatic operator that contains the stored phrases of that customer and the customer is connected to such an automated operator (action block 1550). The customer speaks the phrase identifying the destination (action block 1552) and the automated operator identifies the number associated with that phrase (action block 11554. Thereafter, the call is set up and monitored for a possible SVMS request (action block 1508 et seq.).

FIG. 17 is a description of call delivery from a voice message system or from an automated position for providing voice message service as described herein. A previously recorded message is considered for delivery to the called customer by first setting up a connection to the called customer (action block 1602). Such attempts are made according to scheduling algorithms which are well known in the art and are described, for example, in [reference on delivery of voice messages]. If there is a time out with no answer, the call is disconnected (action block 1604) and another attempt will be made according to the previous history of delivery for that call as amended by the fact that there has been no answer detected (action block 1606). If a busy signal is detected, then the call is disconnected (action block 1608) and another attempt based on the schedule of having encountered a busy signal is tried later (action block 1610). If an answer is detected, then a test 1620 is performed to detect whether this is a special service call. If not, the voice message is delivered (action block 1622). If so, the called customer is prompted for an identification. This prompt may be proceeded by an identification of the destination customer (action block 1624). If the customer speaks or keys the proper identification which is a personal identification number (action block 1626), test 1628 checks whether the identification is correct. If so, the voice message is delivered (action block 1622). If not, a counter is incremented (action block 1630) and a test 1632 is made whether the identification has been keyed more than three times. If so, the call is disconnected and a record is made that someone is trying to access the voice message. If not, the called customer is given another chance to key the correct identification. This kind of service can be provided by giving the called customer a 700 number and recording in the database for that 700 number, the POTS directory of that customer so that the call can be completed if the customer is available and by storing the customer's personal identification number. If a caller wishes to leave a voice message and does not wish to try to complete the call, then the caller can simply press ∗867 immediately after dialing in order to request the voice message service. Advantageously, such an arrangement ensures that private messages are delivered only to the appropriate recipient.

This arrangement can also be used for setting up 1+ calls, (i.e., calls which are not of an operator assistance type). If such a call is received in switch 1 (action block 1540, FIG. 15), then test 1542 determines whether the caller has SVMS service. This test is performed as described in U.S. patent 4,932,042 by querying the translation database of switch 1 to determine whether the customer has that service. In some cases, a telephone operating company will choose to offer the service to all customers. The customer is identified by an automatic number identification forwarded from the end office connected to the customer or is simply identified by the location on the switch if the switch is an end office for that customer. If the caller does not have SVMS the call is set up conventionally (action block 1544) but if the caller does have SVMS then a connection is set up to an automated position for monitoring the call (action block 1546) and thereafter the actions described above with respect to action block 1508 et seq. are performed.

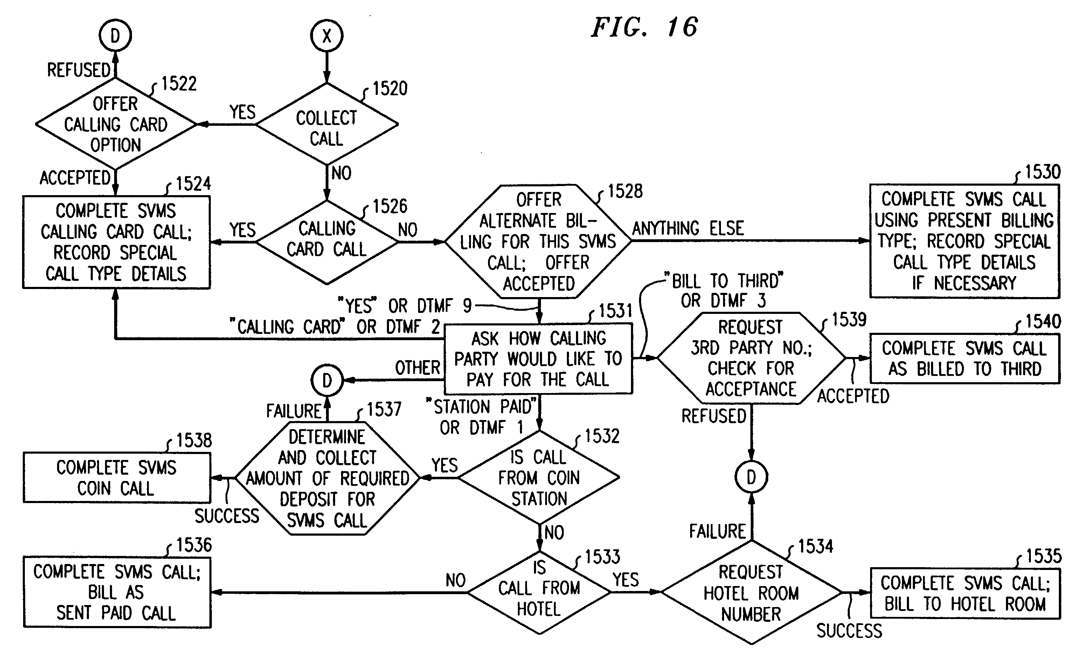

By equipping the automated position group 50 with an appropriate program in its PC 1407, voice message service can be provided from the automated position group and further the additional program to provide spontaneous voice message service can also be provided from PC 1407. Disk 1411 is used for storing voice messages and speech processor 1405 can be used for recognizing speech (such as spoken numbers and "yes" and "no" for detecting dual tone multifrequency (DTMF) signals keyed by customers and for detecting busy tone and answer signals as received from a called switch. The programs for controlling voice message service are well known in the art. The programs for controlling spontaneous voice message service have been described herein and for providing spontaneous voice message service on non-operator calls from another switch have been described in U.S. Patent 4,932,042. Alternatively, centralized voice message service can be utilized in conjunction with the principles of this invention by switching a call to a centralized voice message system at the time that a decision has been made to complete a VMS call (action block 1524 or action block 1530 of FIG. 16). These action blocks would simply be replaced by an action block to forward set up a connection to a voice message center and to forward to that voice message center the accumulated records for the call. The voice message center can effect delivery including the delivery of special service calls in the same way as the automated position group adapted to provide spontaneous voice message service. A third option is to provide a voice messaging system 52 (FIG. 1 ) attached to the operator switch.

It may be desirable to provide a number of specialized automated position groups having a large amount of disk space available to provide voice message service while the rest of the automated position groups are primarily dedicated to handling operator functions. If this decision is made, then at the time when a decision is made to set up a voice message call the call is rerouted to one of these specialists automated position groups; this specialist automated position group then also performs the message delivery function of FIG. 17.

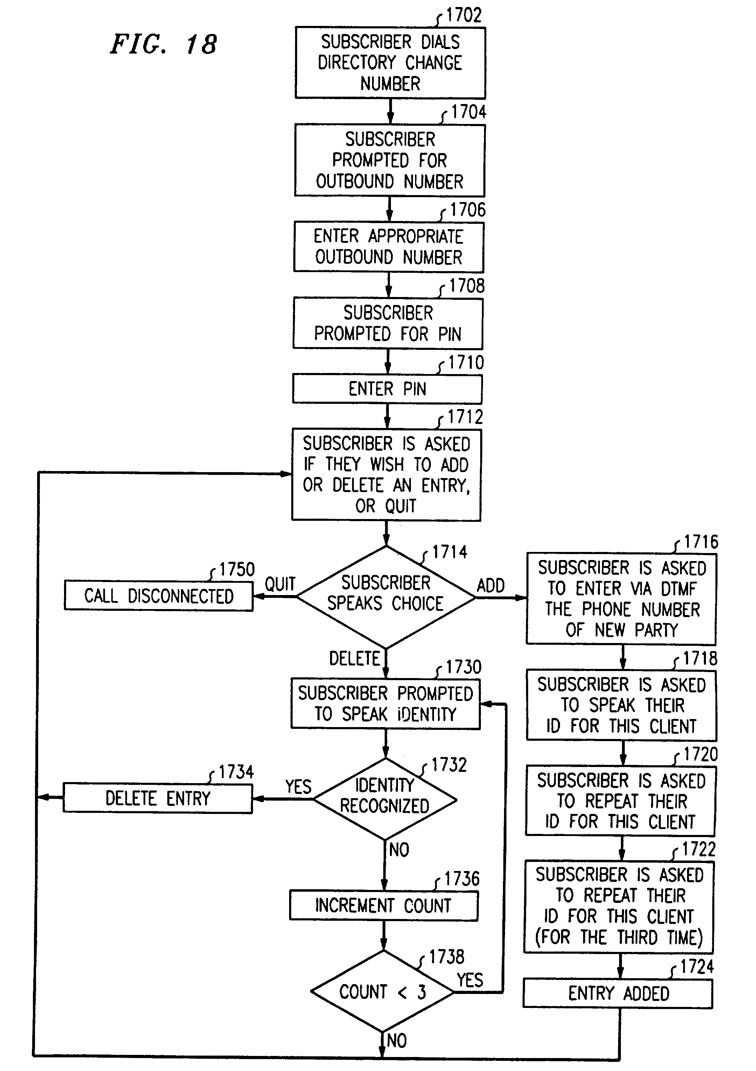

FIG. 18 is a flowchart of the method for allowing subscribers to prerecord phrases for subsequent recognition by an automated operator as described with respect to block 1550 et seq. The subscriber dials a special directory change number, presumably an 800 number, which gives that subscriber and all other subscribers served from the automated position group in which the subscriber phrases are stored, the recognition capabilities for recognizing that subscriber's phrases (action block 1702). The subscriber is prompted for the outbound number that is dedicated to that subscriber for the service (the 700, 800, or 900 number assigned to that customer) (action block 1704). The subscriber enters the appropriate outbound number via DTMF (action block 1706). The subscriber is then prompted for a personal identification number to make sure that only the authorized subscriber can change the list (action block 1708). The subscriber enters the personal identification number via DTMF (action block 1710). Assuming that the personal identification number is correct (if it is not correct the subscriber may be reprompted and subsequently be disconnected), the subscriber is asked if he/she wishs to add or delete an entry or quit (action block 1712). The subscriber speaks a choice (action block 1714). If the choice is "quit", then the call is disconnected (action block 1750).

If the choice is "add", then the subscriber is prompted to enter the phone number of the new party by DTMF (action block 1716). The customer is then asked to speak the identity of the client three times (action blocks 1718, 1720, 1722). The entry is then added to the subscriber's list (action block 1724), and action block 1712 is reentered.

If the subscriber speaks the word "delete", then the subscriber is prompted to speak the identity of the entry to be deleted (action block 1730). Test 1732 is used to check whether the identity is recognized. If the identity is recognized, then the entry is deleted and an announcement to that effect is made (action block 1734), a count (discussed hereinafter with respect to action blocks 1736 and 1738) is reset, and action block 1712 is reentered. If the identity is not recognized, then a count is incremented (action block 1736) and test 1738 is performed to determine whether the count is still less than three. If so, then action block 1730 is entered; if not, action block 1712 is entered.

The above description is considered to be only an illustrative embodiment of the invention. Other alternatives are possible.

For example, a service to the handicapped may be offered by asking them to speak an identifying command followed by a spoken directory number to allow them to set up standard, normally dialed, calls. Further, it is possible to have many different tradeoffs between what is recognized by automatic voice processing techniques and what is recognized only by use of an operator. Prompting tones and prompting announcements can be selected based on experience in human factors tests and can be changed as customers become more sophisticated. It is to be understood that various and numerous other arrangements may be devised by one skilled in the art.

## Claims

1. A method for use in a telephone switching system having a switching network for serving a call whose destination is specified by dialed signals from a caller, the method comprising:
analyzing speech signals, in automated equipment comprising speech recognition equipment, from a caller received via said network to identify a type of said call; and
responsive to the type identification sending a switching network request message from said automated equipment to said system for requesting connection of said call to a call destination;
wherein said system is connectable to an attended operator position,
CHARACTERISED IN THAT
said request message is essentially the same as a corresponding request message transmitted from an attended operator position.

2. A method as claimed in claim 1 comprising:
establishing said requested connection; and
monitoring said requested connection for detecting an answer signal.

3. A method as claimed in claim 2 comprising:
responsive to detecting said answer signal, announcing from automated equipment to said called terminal a request to issue a pre-specified command; and
responsive to detecting said pre-specified command from said called terminal, transmitting a second data message to said switch to request a connection between said calling and said called terminal.

4. A method as claimed in claim 3 wherein said system is connected to at least one attended operator position, and comprising:
responsive to detecting another command from said called terminal, transmitting a request to said switch to connect said called terminal to an attended operator position.

5. A method as claimed in claim 3 wherein said command is a speech command.

6. A method as claimed in claim 3 wherein said command is a dual tone multifrequency (DTMF) signal which is detected.

7. A method as claimed in claim I comprising the step of:
preceding said analyzing step, prompting, from said automated equipment, a calling customer at said calling customer terminal to issue a command.

8. A method as claimed in claim 1 comprising the providing of voice message service comprising the step of:
responsive to detection of a pre-specified spoken command connecting said call to means for recording a message for subsequent delivery to said called customer.

9. A method as claimed in claim 8 comprising the steps of:
detecting a busy condition reported for said called customer; and
responsive to said detection of a busy condition, announcing to said incoming call an offer to provide voice message service if a caller of said incoming call provides said pre-specified spoken command.

10. A method as claimed in claim 1 wherein said call destination is only an intermediate destination specifying said automated equipment, the method further comprising the establishing of another call comprising the steps of:
responsive to receiving a number for identifying a calling customer, establishing a connection to said automated equipment;
in said automated equipment, recognizing a spoken command from said calling customer for identifying a number of a called customer corresponding to said spoken command; and
establishing said other call to a telephone station identified by said identified number.

11. Circuit means (50) for use in a switching system (12) having controller means for controlling said system to establish call connections, said circuit means connectable through a switching network of said system to a caller (40,42) for furnishing operator-like automated speech interactions with that caller on special service calls normally requiring operator assistance for their completion, and as a substitute for operator position services, said circuit means comprising:
means (1405) for analyzing a speech command issue by said caller in response to a prompting signal and received in said circuit means to automatically identify a type of each said special service call; and
means (1407) for analyzing said type to determine a requested connection for each call;
wherein said controller means is connected to attended operator position means by a hardware/software interface for transmitting data messages for requesting a connection;
CHARACTERIZED IN THAT
said circuit means are connected to said controller means by a hardware/software interface, said interface comprising
means (1421) for transmitting a data message for requesting a connection over a hardware/software interface that is essentially identical with said hardware/software interface connected to said attended operator position means.

12. Circuit means as claimed in claim 11 comprising means (1413) for transmitting a data message to said controller means for controlling establishment of a requested connection for said each call.

## Patentansprüche

1. Verfahren zur Verwendung in einem Fernsprechvermittlungssystem mit einem Koppelnetz zur Abwicklung eines Anrufs, dessen Ziel durch Wählsignale von einem Anrufer angegeben wird, mit den folgenden Schritten:
Analysieren von Sprachsignalen von einem Anrufer, die über das besagte Netz empfangen werden, in automatisierten Einrichtungen, die Spracherkennungseinrichtungen umfassen, um eine Art des Anrufs zu identifizieren; und
als Reaktion auf die Identifizierung der Art Senden einer Koppelnetzanforderungsnachricht von den besagten automatisierten Einrichtungen zu dem besagten System, um die Durchschaltung des besagten Anrufs zu einem Anrufsziel anzufordern;
wobei das besagte System mit einem bedienten Vermittlungsplatz verbindbar ist,
dadurch gekennzeichnet, daß
die besagte Anforderungsnachricht im wesentlichen dieselbe wie eine entsprechende Anforderungsnachricht ist, die aus einem bedienten Vermittlungsplatz übertragen wird.

2. Verfahren nach Anspruch 1, wobei:
die besagte angeforderte Verbindung hergestellt wird; und
die besagte angeforderte Verbindung überwacht wird, um ein Antwortsignal zu erkennen.

3. Verfahren nach Anspruch 2, wobei:
als Reaktion auf die Erkennung des besagten Antwortsignals der besagten angerufenen Endeinrichtung von automatisierten Einrichtungen eine Anforderung angesagt wird, einen vorbestimmten Befehl auszugeben; und
als Reaktion auf die Erkennung des besagten vorbestimmten Befehls aus der besagten angerufenen Endeinrichtung eine zweite Datennachricht zu der besagten Vermittlung übertragen wird, um eine Verbindung zwischen der besagten anrufenden und der angerufenen Endeinrichtung anzufordern.

4. Verfahren nach Anspruch 3, wobei das besagte System mit mindestens einem bedienten Vermittlungsplatz verbunden ist, und wobei:
als Reaktion auf die Erkennung eines weiteren Befehls aus der besagten angerufenen Endeinrichtung eine Anforderung zu der besagten Vermittlung übertragen wird, die besagte angerufene Endeinrichtung mit einem bedienten Vermittlungsplatz zu verbinden.

5. Verfahren nach Anspruch 3, wobei der besagte Befehl ein Sprachbefehl ist.

6. Verfahren nach Anspruch 3, wobei der besagte Befehl ein MehrfrequenzWahlsignal (DTMF-Signal) ist, das erkannt wird.

7. Verfahren nach Anspruch 1, wobei:
vor dem besagten Analysierungsschritt ein anrufender Teilnehmer an der besagten anrufenden Endeinrichtung von den besagten automatisierten Einrichtungen zur Ausgabe eines Befehls aufgefordert wird.

8. Verfahren nach Anspruch 1, das die Bereitstellung eines Sprachspeicherdienstes umfaßt, wobei:
als Reaktion auf das Erkennen eines vorbestimmten gesprochenen Befehls der besagte Anruf mit Mitteln zum Aufzeichnen einer Nachricht zur nachfolgenden Übermittlung zu dem besagten angerufenen Teilnehmer verbunden wird.

9. Verfahren nach Anspruch 8, wobei:
ein Belegt zustand erkannt wird, der für den besagten angerufenen Teilnehmer gemeldet wird; und
als Reaktion auf die besagte Erkennung eines Belegt zustands dem besagten ankommenden Anruf ein Angebot, Sprachspeicherdienste bereitzustellen, angesagt wird, wenn ein Anrufer des besagten ankommenden Anrufs den besagten vorbestimmten gesprochenen Befehl bereitstellt.

10. Verfahren nach Anspruch 1, wobei das besagte Anrufziel nur ein Zwischenziel ist, das die besagten automatisierten Einrichtungen angibt, wobei das Verfahren ferner das Herstellen eines weiteren Anrufs umfaßt, wobei:
als Reaktion auf den Empfang einer Nummer zur Identifizierung eines anrufenden Teilnehmers eine Verbindung mit den besagten automatisierten Einrichtungen hergestellt wird;
die besagten automatisierten Einrichtungen einen gesprochenen Befehl von dem anrufenden Teilnehmer zur Identifizierung einer diesem gesprochenen Befehl entsprechenden Nummer eines angerufenen Teilnehmers erkennen; und
die besagte weitere Verbindung zu einer Sprechstelle hergestellt wird, die durch die besagte identifizierte Nummer identifiziert wird.

11. Schaltungsmittel (50) zur Verwendung in einem Vermittlungssystem (12) mit einem Steuerungsmittel zur Steuerung des besagten Systems zur Herstellung von Anrufverbindungen, wobei die besagten Schaltungsmittel durch ein Koppelnetz des besagten Systems mit einem Anrufer (40,42) verbindbar sind, um bei Sonderdienstanrufen, die normalerweise zur Verbindungsherstellung Platzbeteiligung erfordern, einer Vermittlungskraft gleichende automatische Sprachdialoge mit diesem Anrufer bereitzustellen, und wobei die besagten Schaltungsmittel als Ersatz für Dienste eines Vermittlungsplatzes folgendes umfassen:
Mittel (1405) zum Analysieren eines Sprachbefehls, der von dem besagten Anrufer als Reaktion auf ein Aufforderungssignal ausgegeben und in den besagten Schaltungsmitteln empfangen wird, um eine Art jedes besagten Sonderdienstanrufes zu identifizieren; und
Mittel (1407) zum Analysieren der besagten Art zur Bestimmung einer angeforderten Verbindung für jeden Anruf;
wobei das besagte Steuerungsmittel zur Übertragung von Datennachrichten zur Anforderung einer Verbindung durch eine Hardware/Software-Schnittstelle mit bedienten Vermittlungsplatzmitteln verbunden ist;
dadurch gekennzeichnet, daß
die besagten Schaltungsmittel durch eine Hardware/Software-Schnittstelle mit dem besagten Steuerungsmittel verbunden sind, wobei die besagte Schnittstelle
Mittel (1421) zur Übertragung einer Datennachricht zur Anforderung einer Verbindung über eine Hardware/Software-Schnittstelle umfaßt, die im wesentlichen mit der besagten Hardware/Software-Schnittstelle identisch ist, die mit den besagten bedienten Vermittlungsplatzmitteln verbunden ist.

12. Schaltungsmittel nach Anspruch 11 mit Mitteln (1413) zur Übertragung einer Datennachricht zu dem besagten Steuerungsmittel zur Steuerung der Herstellung einer angeforderten Verbindung für jeden besagten Anruf.

## Revendications

1. Procédé destiné à être utilisé dans un système de commutation téléphonique ayant un réseau de commutation pour desservir un appel dont la destination est spécifiée par des signaux de numérotation provenant d'un appelant, le procédé comprenant:
l'analyse de signaux de parole, dans un équipement automatisé comprenant un équipement de reconnaissance de la parole, provenant d'un appelant reçus par l'intermédiaire dudit réseau pour identifier un type dudit appel; et
en réponse à l'identification de type, l'envoi d'un message de demande de réseau de commutation par ledit équipement automatisé audit système pour demander la connexion dudit appel à une destination d'appel;
dans lequel ledit système peut être connecté à une position d'opératrice desservie.
CARACTERISE EN CE QUE
ledit message de demande est essentiellement le même qu'un message de demande correspondant transmis à partir d'une position d'opératrice desservie.

2. Procédé selon la revendication 1, comprenant:
l'établissement de ladite connexion demandée; et
la surveillance de ladite connexion demandée pour détecter un signal de réponse.

3. Procédé selon la revendication 2, comprenant:
en réponse à la détection dudit signal de réponse, l'annonce par l'équipement automatisé audit terminal appelé d'une demande d'émission d'une commande pré-spécifiée; et
en réponse à la détection de ladite commande pré-spécifiée provenant dudit terminal appelé, la transmission d'un deuxième message de données audit commutateur pour demander une connexion entre ledit terminal appelant et ledit terminal appelé.

4. Procédé selon la revendication 3, dans lequel ledit système est connecté à au moins une position d'opératrice desservie, et comprenant:
en réponse à la détection d'une autre commande provenant dudit terminal appelé, la transmission audit commutateur d'une demande de connexion dudit terminal appelé à une position d'opératrice desservie.

5. Procédé selon la revendication 3, dans lequel ladite commande est une commande vocale.

6. Procédé selon la revendication 3, dans lequel ladite commande est un signal multifréquence en code 2 (DTMF) qui est détecté.

7. Procédé selon la revendication 1, comprenant l'étape de:
avant ladite étape d'analyse, sollicitation, par ledit équipement automatisé, auprès d'un abonné appelant au niveau dudit terminal d'abonné appelant d'émettre une commande.

8. Procédé selon la revendication 1, comprenant la prestation d'un service de messagerie vocale comprenant l'étape de:
en réponse à la détection d'une commande parlée pré-spécifiée, connexion dudit appel à un moyen d'enregistrement d'un message destiné à être fourni ultérieurement audit abonné appelé.

9. Procédé selon la revendication 8, comprenant les étapes de:
détection d'une condition d'occupation signalée pour ledit abonné appelé; et
en réponse à ladite détection d'une condition d'occupation, annonce audit appel entrant d'une offre de fourniture d'un service de messagerie vocale si un appelant dudit appel entrant fournit ladite commande parlée pré-spécifiée.

10. Procédé selon la revendication 1, dans lequel ladite destination d'appel n'est qu'une destination intermédiaire spécifiant ledit équipement automatisé, le procédé comprenant en outre l'établissement d'un autre appel comprenant les étapes de:
en réponse à la réception d'un numéro servant à identifier un abonné appelant, établissement d'une connexion avec ledit équipement automatisé;
dans ledit équipement automatisé, reconnaissance d'une commande parlée provenant dudit abonné appelant pour identifier un numéro d'un abonné appelé correspondant à ladite commande parlée; et
établissement dudit autre appel avec un poste téléphonique identifié par ledit numéro identifié.

11. Des moyens de circuits (50) destinés à être utilisés dans un système de commutation (12) ayant un moyen de contrôleur pour commander ledit système en vue d'établir des connexions d'appels, lesdits moyens de circuits pouvant être connectés à travers un réseau de commutation dudit système à un appelant (40,42) pour fournir des interactions vocales automatisées à la manière d'une opératrice avec cet appelant lors d'appels de service spéciaux exigeant normalement l'assistance d'une opératrice pour pouvoir être établis, et en substitution aux services de positions d'opératrices, lesdits moyens de circuits comprenant:
un moyen (1405) pour analyser une émission de commande vocale par ledit appelant en réponse à un signal de sollicitation et reçue dans lesdits moyens de circuits pour identifier automatiquement un type de chaque dit appel de service spécial; et
un moyen (1407) pour analyser ledit type pour déterminer une connexion demandée pour chaque appel;
dans lequel ledit moyen de contrôleur est connecté à un moyen de position d'opératrice desservie par une interface matérielle/logicielle en vue de transmettre des messages de données pour demander une connexion;
CARACTERISES EN CE QUE
lesdits moyens de circuits sont connectés audit moyen de contrôleur par une interface matérielle/logicielle, ladite interface comprenant
un moyen (1421) pour transmettre un message de données demandant une connexion sur une interface matérielle/logicielle qui est essentiellement identique à ladite interface matérielle/logicielle connectée audit moyen de position d'opératrice desservie.

12. Moyens de circuits selon la revendication 11, comprenant un moyen (1413) pour transmettre un message de données audit moyen de contrôleur pour commander l'établissement d'une connexion demandée pour chaque dit appel.
